(19) 

Europäisches
Patentamt
European
Patent Office
Office européen
des brevets

(11)  **EP 4 513 987 A1**

(12)  **EUROPEAN PATENT APPLICATION**
published in accordance with Art. 153(4) EPC

(43) Date of publication:
**26.02.2025   Bulletin 2025/09**

(21) Application number: **23810999.5**

(22) Date of filing: **22.05.2023**

(51) International Patent Classification (IPC):
**H04W 52/22** (2009.01)

(52) Cooperative Patent Classification (CPC):
**H04W 52/22; H04W 52/46**

(86) International application number:
**PCT/CN2023/095506**

(87) International publication number:
**WO 2023/226928 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.05.2022   CN 202210562403
19.07.2022   CN 202210851939**

(71) Applicant: **Huawei Technologies Co., Ltd.
Shenzhen, Guangdong 518129 (CN)**

(72) Inventors:
• **HE, Hongli
Shenzhen, Guangdong 518129 (CN)**
• **LI, Xueru
Shenzhen, Guangdong 518129 (CN)**

(74) Representative: **Pfenning, Meinig & Partner mbB
Patent- und Rechtsanwälte
Theresienhöhe 11a
80339 München (DE)**

(54)  **POWER CONTROL METHOD AND RELAY DEVICE**

(57)  This application relates to a power control method and a relay device. The method includes: A relay device determines a target forwarding power based on a first forwarding power, a second forwarding power, and a third forwarding power, and forwards, by using the target forwarding power, a first signal received from a first device to a second device. The target forwarding power is a lowest power of the first forwarding power, the second forwarding power, and the third forwarding power. The first forwarding power is determined based on an indication of a network device, the second forwarding power is related to an input power of the relay device and a forwarding gain of the relay device, and the third forwarding power is determined based on a maximum forwarding power limit of the relay device. According to the method, the relay device may output a forwarding power matching a capability of the relay device or matching a forwarding power expected by the network device.

FIG. 3

**EP 4 513 987 A1**

**Description**

**CROSS-REFERENCE TO RELATED APPLICATIONS**

This application claims priorities to Chinese Patent Application No. 202210562403.X, filed with the China National Intellectual Property Administration on May 23, 2022 and entitled "NCR POWER CONTROL METHOD, NETWORK DEVICE, AND TERMINAL DEVICE", and to Chinese Patent Application No. 202210851939.3, filed with the China National Intellectual Property Administration on July 19, 2022 and entitled "POWER CONTROL METHOD AND RELAY DEVICE", both of which are incorporated herein by reference in their entireties.

**TECHNICAL FIELD**

This application relates to the field of relay device technologies, and in particular, to a power control method and a relay device.

**BACKGROUND**

A relay device has signal amplification and forwarding functions and usually forwards a signal received from one device to another device. A forwarding power of the relay device generally cannot exceed a maximum forwarding power limit. Similar to a maximum transmit power limit of a common terminal device, the maximum forwarding power limit of the relay device may be determined based on a capability of a radio frequency component of the relay device, may be determined according to a related standard, or may be determined according to a corresponding regulation.

**SUMMARY**

When a network device expects that a forwarding power of a relay device or a forwarding power indicated by the network device to the relay device exceeds a maximum forwarding power limit, the relay device should use the maximum forwarding power limit as an actual forwarding power. However, different from a transmit power of a common terminal device, a transmit power of the relay device is not only related to a gain coefficient of a power amplifier of the relay device, but also related to an input power for receiving a signal by the relay device. When a non-linear feature of the power amplifier is not considered, an output power (expressed in dBm) of the relay device may be a sum of the input power (expressed in dBm) for reception and a power gain (expressed in dB). Therefore, when the input power of the relay device for reception is very small, even if a transmit power expected by the network device to be used by the relay device does not exceed the maximum forwarding power limit of the relay device, the output power of the relay device still cannot reach the forwarding power expected or indicated by the network device. As a result, scheduling performance of the network device for the relay device is affected.

To resolve the foregoing technical problem, this application provides a power control method and a relay device, so that a forwarding power outputted by the relay device can match both the maximum forwarding power limit of the relay device and an actual input power.

According to a first aspect, an embodiment of this application provides a power control method. The method may be performed by a communication apparatus. The communication apparatus may be a communication device or an apparatus that can support the communication device in implementing a function needed by the method, for example, a chip system. For example, the communication apparatus is a relay device, a chip disposed in the relay device, or another component configured to implement a function of the relay device. The following uses an example in which the communication apparatus is the relay device for description.

The power control method includes: The relay device determines a target forwarding power based on a first forwarding power, a second forwarding power, and a third forwarding power, and forwards, by using the target forwarding power, a first signal received from a first device to a second device. When the first device is a terminal device, the second device may be a network device. When the first device is a network device, the second device may be a terminal device. The target forwarding power is a lowest power of the first forwarding power, the second forwarding power, and the third forwarding power. The first forwarding power is determined based on an indication of the network device. It may also be considered that the first forwarding power is a forwarding power that the network device expects the relay device to use. The second forwarding power is related to an input power of the relay device and a forwarding gain of the relay device. It may also be considered that the second forwarding power is determined based on the input power (or a receive power) of the relay device and a maximum forwarding gain of the relay device. The third forwarding power is determined based on a maximum forwarding power limit of the relay device.

Therefore, the relay device considers the forwarding power expected by the network device, the maximum forwarding power limit of the relay device, and an output power of the relay device that can be determined based on the actual input power of the relay device and the maximum forwarding gain of the relay device. The relay device determines the lowest power of the first forwarding power, the second forwarding power, and the third forwarding power as the target forwarding power, that is, an actually used forwarding power. According to the method, the relay device may output a forwarding power matching the actual input power or matching the forwarding power expected by the network device.

In a possible implementation, the method further includes: The relay device sends indication information of a forwarding power headroom. The forwarding power headroom is a difference between the first forwarding power and the second forwarding power (or a difference between the second forwarding power and the first forwarding power), and/or the forwarding power headroom is a difference between the first forwarding power and the third forwarding power (or a difference between the third forwarding power and the first forwarding power). The relay device sends the indication information of the forwarding power headroom, that is, the relay device reports the forwarding power headroom. It may also be understood that the relay device reports a forwarding gain headroom. The forwarding gain headroom is a difference between the maximum forwarding gain of the relay device and a forwarding gain expected (or indicated) by the network device (or a difference between the forwarding gain expected (or indicated) by the network device and the maximum forwarding gain of the relay device). The relay device may report the forwarding power headroom to the network device, to notify the network device of a difference between the forwarding power expected by the network device and a forwarding power that can be actually outputted by the relay device. When the network device needs to further improve coverage performance of a terminal device served by the relay device, this helps the network device determine whether to further increase the forwarding power or the forwarding gain or use another means (for example, perform repeated sending in time or allocate more frequency domain resources).

In a possible implementation, when the forwarding power headroom is the difference between the first forwarding power and the second forwarding power, the method further includes: The relay device sends first indication information, where the first indication information indicates a power headroom type, and the power headroom type indicates that the forwarding power headroom is the difference between the first forwarding power and the second forwarding power. When the forwarding power headroom is the difference between the first forwarding power and the third forwarding power, the method further includes: The relay device sends first indication information, where the first indication information indicates a power headroom type, and the power headroom type indicates that the forwarding power headroom is the difference between the first forwarding power and the third forwarding power. When the relay device reports the forwarding power headroom, the relay device further sends the first indication information, to notify the network device that the forwarding power headroom is the difference between the first forwarding power and the second forwarding power or the difference between the first forwarding power and the third forwarding power, so that the network device determines a reason why the relay device cannot output a corresponding forwarding power, to help the network device indicate a more proper forwarding power to the relay device.

Optionally, when the first forwarding power is greater than or equal to the third forwarding power, the forwarding power headroom sent by the relay device includes the difference between the first forwarding power and the third forwarding power; or when the first forwarding power is greater than or equal to the second forwarding power, the forwarding power headroom includes the difference between the first forwarding power and the third forwarding power.

Optionally, when the first forwarding power is greater than or equal to the third forwarding power, the forwarding power headroom sent by the relay device includes or includes only the difference between the first forwarding power and the third forwarding power, and the first indication information indicates that the relay device reports the difference between the first forwarding power and the third forwarding power. When the first forwarding power is less than or equal to the third forwarding power and the first forwarding power is greater than or equal to the second forwarding power, the forwarding power headroom sent by the relay device includes or includes only the difference between the first forwarding power and the second forwarding power, and the first indication information indicates that the relay device reports the difference between the first forwarding power and the second forwarding power.

In a possible implementation, the relay device may determine the first forwarding power in a plurality of manners. For example, the plurality of manners include but are not limited to the following several determining manners. A specific determining manner to be used is not limited in this embodiment of this application.

In a possible determining manner, the relay device may receive second indication information and third indication information, where the second indication information indicates a first bandwidth, and the third indication information indicates a first forwarding power spectral density. Then, the relay device determines the first forwarding power based on the first bandwidth and the first forwarding power spectral density. The first bandwidth is a bandwidth of the first signal, and the first forwarding power spectral density is a forwarding power that is expected by the network device and that is of the relay device on a unit frequency domain unit. The unit frequency domain unit may be a unit hertz, a single resource block (resource block, RB), a single subcarrier, or the like. The network device may indirectly indicate the first forwarding power by indicating the first bandwidth and the first forwarding power spectral density to the relay device, and the relay device determines the first forwarding power based on the first bandwidth and the first forwarding power spectral density.

The first forwarding power may satisfy a formula: $P1 = PSD1 + 10 \times \log_{10}(B) + C$ [dBm]. P1 is the first forwarding power, PSD1 is the first forwarding power spectral density, and B is the first bandwidth. C is predefined or preconfigured, or C is indicated by the network device or is determined by the relay device. A unit of PSD corresponds to a unit of B. For example, if PSD is a power on each RB, that is, the unit is dBm/RB, the unit of B is also RB.

In a possible implementation, the relay device may receive a first index, where the first index indicates the first bandwidth and the first forwarding power spectral density, and then the relay device determines the first forwarding power based on the first index and a first mapping relationship. The first mapping relationship is an association relationship between a plurality of indexes and a plurality of groups of parameters, and one group of parameters in the plurality of groups of parameters includes one bandwidth and one forwarding power spectral density. In this solution, the plurality of groups of parameters may be predefined or preconfigured, or may be indicated by the network device. Each group of parameters may be associated with one index, so that the network device may indicate the first bandwidth and the first forwarding power spectral density to the relay device by using one index. This can reduce signaling overheads.

Optionally, the first index is associated with a beam, a time unit, or a time unit set. In other words, the first bandwidth and the first forwarding power spectral density are associated with the beam, the time unit, or the time unit set. It should be understood that interference and coverage may be different in different beam directions. The first bandwidth and the first forwarding power spectral density are associated with a beam, and the first bandwidth and the first forwarding power spectral density of the beam having small interference and large coverage may be selected, so that the first forwarding power determined by the relay device can meet a requirement of small interference and large coverage. Similarly, beam directions are consistent in a same time unit. The first bandwidth and the first forwarding power spectral density are associated with the time unit or the time unit set, and different indexes may be selected in different time units, so that the first forwarding power determined by the relay device can also meet the requirement of small interference and large coverage.

In another possible determining manner, the relay device may receive second indication information and fourth indication information. The second indication information indicates a first bandwidth, the fourth indication information indicates a first target receive power spectral density, and the first target receive power spectral density is a receive power that is expected by the second device on a unit frequency domain unit. Then, the relay device determines the first forwarding power based on the first target receive power spectral density, the first bandwidth, and a first path loss. The first path loss is a path loss between the relay device and the second device, and the first path loss may be determined by the relay device or may be indicated by the network device. In other words, the relay device may determine the first forwarding power based on the first target receive power spectral density and the first bandwidth that are indicated by the network device and the first path loss. Because the relay device considers the first path loss, the first forwarding power can be adjusted based on an actual path loss.

In still another possible determining manner, the relay device may receive fifth indication information, where the fifth indication information may indicate a first target receive power, and the first target receive power is a receive power expected by the second device. Then, the relay device determines the first forwarding power based on the first target receive power and a first path loss. In other words, the relay device may determine the first forwarding power based on the first target receive power indicated by the network device and the first path loss. Similarly, because the relay device considers the first path loss, the first forwarding power can be adjusted based on an actual path loss.

For example, the first forwarding power may satisfy a formula: $P1=P6+PL+C$. $P1$ is the first forwarding power, $P6$ is the first target receive power, and $PL$ is the first path loss. $C$ is a predefined, preconfigured, or configured value. Alternatively, $C$ is indicated by the network device or $C$ is determined by the relay device.

Optionally, the fifth indication information may include a second index. The relay device may specifically determine the first target receive power based on the second index and a second mapping relationship. The second mapping relationship is an association relationship between a plurality of indexes and a plurality of target receive powers, the second index is one of the plurality of indexes, and the first target receive power is one of the plurality of target receive powers. In this solution, the second mapping relationship may be predefined or preconfigured, or may be indicated by the network device. Because each target receive power is associated with one index, the first target receive power may be indicated by indicating an index, thereby reducing signaling overheads.

Optionally, the second index is associated with a beam, a time unit, or a time unit set. In other words, the target receive power is associated with the beam, the time unit, or the time unit set. It should be understood that interference and coverage may be different in different beam directions. Beam directions are consistent in a same time unit. Therefore, a matched index may be selected in different time units based on a beam direction, so that the first forwarding power determined by the relay device can meet a requirement of small interference and large coverage.

In a possible implementation, the relay device may further receive a value of the first path loss. In other words, the first path loss may be indicated by the network device, and does not need to be determined by the relay device, so that measurement by the relay device can be avoided. Alternatively, the relay device may receive a first reference signal, and determine the first path loss based on a transmit power of the first reference signal and a receive power of the first reference signal. In other words, the second device may send the first reference signal to the relay device in advance, and the relay device measures the first reference signal to determine the receive power of the first reference signal, so as to determine the first path loss.

Optionally, the relay device receives indication information of the first reference signal. For example, the relay device receives specific configuration information such as identification information, a time-frequency-code resource, and the transmit power of the first reference signal. For example, when the first device is the network device, and the second device is the terminal device, the first reference signal may be a first sounding reference signal (sounding reference signal, SRS). The relay device receives configuration information of the first SRS from the network device, where the configuration information includes an identifier of the first SRS and other information such as a time-frequency position, a used sequence, and a transmit power of the first SRS.

In a possible implementation, that the relay device determines the first path loss based on a transmit power of the first reference signal and a receive power of the first reference signal includes: The relay device determines the first path loss based on the transmit power of the first reference signal, the receive power of the first reference signal, and a first gain. The transmit power of the first reference signal may be indicated by the network device. The first gain is a difference between a gain of a first antenna and a gain of a second antenna. The first antenna is used by the relay device to receive the first reference signal from the first device and measure the first reference signal. The second antenna is configured to receive the first signal forwarded to the second device. In this solution, it is considered that an antenna used by a mobile terminal (mobile terminal, MT) module in the relay device is different from an antenna used by a radio unit (radio unit, RU) module for signal forwarding processing, where the MT module is configured to receive and measure the first reference signal, and the RU module is configured to forward a signal (including the first signal). Therefore, a gain of the antenna (that is, the first antenna) corresponding to the MT module may be different from a gain of the antenna (that is, the second antenna) corresponding to the RU module. Therefore, the relay device may determine the more accurate first path loss with reference to the first gain.

Optionally, that the relay device determines the first path loss based on a transmit power of the first reference signal and a receive power of the first reference signal includes: The relay device determines the first path loss based on the transmit power of the first reference signal, the receive power of the first reference signal, and a first coefficient. The first coefficient is a coefficient of signal energy inputted into the MT module relative to total received signal energy. Specifically, when the MT module and the RU module in the relay device use a same antenna, the relay device may receive and measure the first reference signal when receiving and forwarding a signal. Therefore, a part of the received signal needs to be coupled to the MT module. The MT module is configured to receive and measure the first reference signal, and the RU module is configured to forward a signal (including the first signal). Therefore, the first path loss determined by the relay device based on the first coefficient is more accurate.

Optionally, that the relay device receives indication information of a value of the first forwarding power includes: The relay device receives a third index, and determines the value of the first forwarding power based on the third index and a third mapping relationship. The third mapping relationship is an association relationship between a plurality of indexes and values of a plurality of forwarding powers, the third index is one of the plurality of indexes, and the value of the first forwarding power is a $1^{st}$ value in the values of the plurality of forwarding powers.

Optionally, the third index is associated with a beam, a time unit, or a time unit set. In other words, the first forwarding power is associated with the beam, the time unit, or the time unit set, so that a matched index may be selected based on a beam direction, that is, the matched first forwarding power is selected, to enable the relay device to meet a requirement of small interference and large coverage by using the first forwarding power.

In a possible implementation, the method further includes: The relay device receives indication information of a first deviation, where the first deviation is used to adjust the original first forwarding power. An adjusted first forwarding power is a sum of the original first forwarding power and the first deviation. In other words, the network device may further indicate the first deviation to the relay device, to adjust the first forwarding power that has been determined by the relay device.

In still another possible determining manner, the relay device may receive indication information of a first forwarding gain, and determine the first forwarding power based on the first forwarding gain and a first receive power. The first forwarding gain is a gain of a forwarding power of the relay device for the first signal relative to a receive power of the first signal. The first receive power is used to determine the receive power at which the relay device receives the first signal. Considering that the relay device may control a forwarding power by using a forwarding gain in a forwarding process, indicating the forwarding gain to the relay device helps the relay device determine a working manner in advance.

In a possible implementation, that the relay device receives indication information of a first forwarding gain includes: The relay device receives a fourth index, and determines the first forwarding gain based on the fourth index and a fourth mapping relationship. The fourth mapping relationship is an association relationship between a plurality of indexes and a plurality of forwarding gains, the fourth index is one of the plurality of indexes, and the first forwarding gain is one of the plurality of forwarding gains. The first forwarding gain is indicated by using an index. This can reduce signaling overheads.

In a possible implementation, the method further includes: The relay device measures a signal sent in a first time subunit, and determines the first receive power based on an obtained measurement result. The first time subunit belongs to a first time unit, a start location of the first time subunit is the same as a start location of the first time unit, and the first time unit is a time unit in which the first signal is located. Alternatively, the first time subunit is before a first time unit, an end location of the first time subunit is the same as a start location of the first time unit, and the first time unit is a time unit in which the first signal is located. In this solution, the relay device does not need to determine the first receive power by measuring a reference signal received from the network device or the terminal device, but before forwarding the first signal, measures the first signal in a time subunit before a time unit for forwarding the first signal or in a time subunit in the time unit for forwarding the first signal, to determine the first receive power.

In a possible implementation, the method further includes: The relay device receives a second reference signal and second indication information, where the second indication information indicates a first bandwidth, and the first bandwidth is a bandwidth of the first signal; and then the relay device determines a first receive power based on a reference signal received power (reference signal received power, RSRP) of the second reference signal and the first bandwidth, and determines the first forwarding power based on a first forwarding gain and the first receive power. The first receive power is used to determine a receive power for receiving the first signal, and the relay device receives the first signal after determining the first receive power. The first forwarding gain is a gain of a forwarding power of the relay device for the first signal relative to the receive power of the first signal. In this solution, before forwarding the first signal, the relay device may measure the reference signal received from the network device or the terminal device, to determine the first receive power. After determining the first receive power, the relay device receives the first signal; and the relay device determines the first forwarding power based on the first receive power and the first forwarding gain.

In a possible implementation, the method further includes: The relay device receives second indication information and sixth indication information, where the second indication information indicates a first bandwidth, and the first bandwidth is a bandwidth of the first signal. The sixth indication information indicates a first receive power spectral density, and the first receive power spectral density is a receive power that is expected (may also be understood as estimated) by the network device and that is of the relay device on a unit frequency domain unit. Then, the relay device determines a first receive power based on the first bandwidth and the first receive power spectral density, where the first receive power is used to determine a receive power for receiving the first signal. After determining the first receive power, the relay device receives the first signal. The relay device determines the first forwarding power based on the first receive power and a first forwarding gain. The first forwarding gain is a gain of a forwarding power of the relay device for the first signal relative to the receive power of the first signal. In this solution, the relay device may determine the first receive power based on the first receive power spectral density expected by the network device and the bandwidth of the first signal.

In a possible implementation, the method further includes: The relay device receives indication information of a second deviation, where the second deviation is used to adjust the first forwarding gain. An adjusted first forwarding gain is a sum of the original first forwarding gain and the second deviation. The network device may indirectly indicate a current forwarding gain of the relay device, that is, the adjusted first forwarding gain, by indicating the second deviation to the relay device.

In a possible implementation, the method further includes: The relay device determines the second forwarding power based on a second receive power. The second receive power is a receive power at which the relay device receives the first signal or is used to determine a receive power at which the relay device receives the first signal. The second receive power may be an input power of the relay device, and the second forwarding power is determined based on the second receive power. In other words, when the relay device determines the target forwarding power, a maximum transmit power that can be supported by the relay device is further considered, so that the relay device can output a transmit power matching an actual capability.

In a possible implementation, the second forwarding power is a sum of the second receive power and a third gain, and the third gain is a maximum forwarding gain of the relay device.

In a possible implementation, the second forwarding power is a maximum forwarding power corresponding to the second receive power. The relay device stores an association relationship between the second forwarding power and the second receive power. Because the relay device stores the association relationship between the second forwarding power and the second receive power, it may be agreed that the second forwarding power is the maximum forwarding power corresponding to the second receive power, and implementation is simple.

In a possible implementation, the method further includes: The relay device receives a second reference signal and second indication information, where the second indication information indicates a first bandwidth, and the first bandwidth is a bandwidth of the first signal. Then, the relay device determines the second receive power based on an RSRP of the second reference signal and the first bandwidth. In this solution, before forwarding the first signal, the relay device may measure the second reference signal received from the network device or the terminal device, to determine the second receive power.

In a possible implementation, the method further includes: The relay device measures a signal sent in a first time subunit, and determines the second receive power based on an obtained measurement result. The first time subunit belongs to a first time unit, a start location of the first time subunit is the same as a start location of the first time unit, and the first time unit is a time unit in which the first signal is located. Alternatively, the first time subunit is before a first time unit, an end location of the first time subunit is the same as a start location of the first time unit, and the first time unit is a time unit in which the first signal is located. In this solution, the relay device does not need to determine the first receive power by measuring the reference signal received from the network device or the terminal device, but before forwarding the first signal, measures the first signal in a time subunit before a time unit for forwarding the first signal or in a time subunit in the time unit for forwarding the first signal, to determine the second receive power.

In a possible implementation, the method further includes: The relay device receives second indication information and seventh indication information, where the second indication information indicates a first bandwidth, and the first bandwidth is a bandwidth of the first signal. The seventh indication information indicates a second receive power spectral density, and the second receive power spectral density is a receive power that is expected by the network device and that is of the relay device on a unit frequency domain unit. Then, the relay device determines the second receive power based on the first bandwidth and the second receive power spectral density, where the second receive power is used to determine a receive power for receiving the first signal. After determining the second receive power, the relay device receives the first signal. The relay device determines the second forwarding power based on the second receive power and a first forwarding gain. The first forwarding gain is a gain of a forwarding power of the relay device for the first signal relative to the receive power of the first signal. In this solution, the relay device may determine the second forwarding power based on the second receive power spectral density expected by the network device, the bandwidth of the first signal, and the first forwarding gain.

In a possible implementation, the method further includes: The relay device determines the third forwarding power based on a total transmit power. The total transmit power is a maximum transmit power determined based on a capability of the relay device, and/or the total transmit power is indicated by the network device or preconfigured. In this solution, the maximum forwarding power limit of the relay device is considered, so that the relay device can output a matched transmit power.

In a possible implementation, that the relay device determines the third forwarding power based on a total transmit power includes:

The relay device determines the third forwarding power based on a transmit power of a first module and the total transmit power. The first module is configured to send a signal of the relay device to the second device. For example, the first module is an MT module, and is configured to feed back information to the network device and the like. In this case, the third forwarding power is a remaining power obtained by subtracting the transmit power of the MT module from a total transmit power limit. In addition to considering the maximum forwarding power limitation of the relay device, the third forwarding power may be further determined based on a transmit power of uplink information of the relay device, which is more reasonable.

According to a second aspect, an embodiment of this application provides a method for reporting a forwarding power headroom. The method may be performed by a communication apparatus. The communication apparatus may be a communication device or an apparatus that can support the communication device in implementing a function needed by the method, for example, a chip system. For example, the communication apparatus is a relay device, a chip disposed in the relay device, or another component configured to implement a function of the relay device. The following uses an example in which the communication apparatus is the relay device for description.

The method includes: The relay device generates indication information of a forwarding power headroom, and sends the indication information to a network device. The forwarding power headroom is a difference between a first forwarding power and a second forwarding power (or a difference between the second forwarding power and the first forwarding power), and/or the forwarding power headroom is a difference between the first forwarding power and a third forwarding power (or a difference between the third forwarding power and the first forwarding power). The first forwarding power is a forwarding power that the network device expects the relay device to use. The second forwarding power is related to an input power of the relay device and a forwarding gain of the relay device. It may also be considered that the second forwarding power is determined based on the input power (or a receive power) of the relay device and a maximum forwarding gain of the relay device. The third forwarding power is determined based on a maximum forwarding power limit of the relay device. The relay device may report the forwarding power headroom to the network device, to notify the network device of a difference between the forwarding power expected by the network device and a forwarding power that can be actually outputted by the relay device. When the network device needs to further improve coverage performance of a terminal device served by the relay device, this helps the network device determine whether to further increase the forwarding power or a forwarding gain or use another means (for example, perform repeated sending in time or allocate more frequency domain resources).

In a possible implementation, when the forwarding power headroom is the difference between the first forwarding power and the second forwarding power, the method further includes: The relay device sends first indication information, where the first indication information indicates a power headroom type, and the power headroom type indicates that the forwarding power headroom is the difference between the first forwarding power and the second forwarding power. When the forwarding power headroom is the difference between the first forwarding power and the third forwarding power, the method further includes: The relay device sends first indication information, where the first indication information indicates a power headroom type, and the power headroom type indicates that the forwarding power headroom is the difference between the first forwarding power and the third forwarding power. If the relay device reports the forwarding power headroom, the relay device further sends the first indication information, to notify the network device that the forwarding power headroom is the difference between the first forwarding power and the second forwarding power or the difference between the first forwarding power and the third forwarding power, so that the network device determines a reason why the relay device cannot output a corresponding forwarding power, to help the network device indicate a more proper forwarding power to the relay device.

Optionally, when the first forwarding power is greater than or equal to the third forwarding power, the forwarding power headroom sent by the relay device includes the difference between the first forwarding power and the third forwarding power; or when the first forwarding power is greater than or equal to the second forwarding power, the forwarding power headroom includes the difference between the first forwarding power and the third forwarding power.

Optionally, when the first forwarding power is greater than or equal to the third forwarding power, the forwarding power headroom sent by the relay device includes or includes only the difference between the first forwarding power and the third forwarding power, and the first indication information indicates that the relay device reports the difference between the first forwarding power and the third forwarding power. When the first forwarding power is less than or equal to the third forwarding power and the first forwarding power is greater than or equal to the second forwarding power, the forwarding power headroom sent by the relay device includes or includes only the difference between the first forwarding power and the second forwarding power, and the first indication information indicates that the relay device reports the difference between the first forwarding power and the second forwarding power.

According to a third aspect, an embodiment of this application provides a communication method. The method may be performed by a communication apparatus. The communication apparatus may be a communication device or an apparatus that can support the communication device in implementing a function needed by the method, for example, a chip system. For example, the communication apparatus is a relay device, a chip disposed in the relay device, or another component configured to implement a function of the relay device. The following uses an example in which the communication apparatus is the relay device for description.

The method includes: The relay device determines a target forwarding gain based on a first forwarding gain, a second forwarding gain, and a third forwarding gain, and forwards, by using the target forwarding gain, a first signal received from a first device to a second device. The first forwarding gain is a forwarding gain indicated by a network device to the relay device, the second forwarding gain is a maximum forwarding gain of the relay device, and the third forwarding gain is a forwarding gain determined based on a third forwarding power of the relay device and a receive power of the first signal.

In a possible implementation, the method further includes: The relay device determines the third forwarding power based on a total transmit power, where the total transmit power is a maximum transmit power determined based on a capability of the relay device, and/or the total transmit power is indicated by the network device or preconfigured.

In a possible implementation, that the relay device determines the third forwarding power based on the total transmit power includes:

The relay device determines the third forwarding power based on a transmit power of a first module and the total transmit power, where the first module is configured to send a signal of the relay device to the second device. For example, the first module is an MT module, and is configured to feed back information to a base station and the like. In this case, the third forwarding power is a remaining power obtained by subtracting the transmit power of the MT module from a total transmit power limit.

In a possible implementation, the method further includes: The relay device sends indication information of a forwarding gain headroom, where the forwarding gain headroom is a difference between the first forwarding gain and the second forwarding gain (or a difference between the second forwarding gain and the first forwarding gain), and/or the forwarding gain headroom is a difference between the first forwarding gain and the third forwarding gain (or a difference between the third forwarding gain and the first forwarding gain). The relay device may report the forwarding gain headroom to the network device, to notify the network device of a difference between a forwarding gain expected by the network device and a forwarding gain that can be actually outputted by the relay device. When the network device needs to further improve coverage performance of a terminal device served by the relay device, this helps the network device determine whether to further increase the forwarding power or a forwarding gain or use another means (for example, perform repeated sending in time or allocate more frequency domain resources).

In a possible implementation, when the forwarding gain headroom is the difference between the first forwarding gain and the second forwarding gain, the method further includes: The relay device sends the indication information of the forwarding gain headroom, where the indication information indicates a gain headroom type, and the gain headroom type indicates that the forwarding gain headroom is the difference between the first forwarding gain and the second forwarding gain. When the forwarding gain headroom is the difference between the first forwarding gain and the third forwarding gain, the method further includes: The relay device sends the indication information of the forwarding gain headroom, where the indication information indicates a gain headroom type, and the gain headroom type indicates that the forwarding gain headroom is the difference between the first forwarding gain and the third forwarding gain. When the relay device reports the forwarding gain headroom, the relay device further sends first indication information, to notify the network device that the forwarding gain headroom is the difference between the first forwarding gain and the second forwarding gain or the difference between the first forwarding gain and the third forwarding gain, so that the network device determines a reason why the relay device cannot output a corresponding forwarding gain, to help the network device indicate a more proper forwarding gain to the relay device.

According to a fourth aspect, an embodiment of this application provides a communication apparatus. The communication apparatus has a function of implementing the behavior in the method embodiment in any one of the first aspect to the third aspect. For beneficial effects, refer to the descriptions in the first aspect to the third aspect. Details are not described herein again.

The communication apparatus may be the relay device in any one of the first aspect to the third aspect, or the communication apparatus may be an apparatus that can implement the method provided in the first aspect (or the second aspect or the third aspect), for example, a chip or a chip system. In a possible design, the communication apparatus includes a corresponding means (means) or module configured to perform the method in the first aspect (or the second aspect or the third aspect). For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or may be understood as that the sending unit and the receiving unit are a same function module. Alternatively, the transceiver unit is also understood as a general name of a sending unit and a receiving unit, and the sending unit and the receiving unit may be different function modules. These units (modules) may perform corresponding functions in the method example in the first aspect (or the second aspect or the third aspect). For details, refer to the detailed descriptions in the method example. Details are not described herein again.

According to a fifth aspect, an embodiment of this application provides a communication apparatus. The communication apparatus may be the communication apparatus in the fourth aspect, or a chip or a chip system disposed in the communication apparatus in the fourth aspect. The communication apparatus may be a relay device, a network device, or a terminal device. The communication apparatus includes a communication interface and a processor. Optionally, the communication apparatus further includes a memory. The memory is configured to store a computer program. The processor is coupled to the memory and the communication interface. When the processor reads the computer program or instructions, the communication apparatus is enabled to perform the method performed by the relay device in the foregoing method.

According to a sixth aspect, an embodiment of this application provides a communication apparatus. The communication apparatus includes an input/output interface and a logic circuit. The input/output interface is configured to input and/or output information. The logic circuit is configured to perform the method according to one or more of the first aspect to the third aspect.

According to a seventh aspect, an embodiment of this application provides a chip system. The chip system includes a processor, and may further include a memory and/or a communication interface. The chip system is configured to implement the method in one or more of the first aspect to the third aspect. In a possible implementation, the chip system further includes the memory, configured to store a computer program. The chip system may include a chip, or may include the chip and another discrete component.

According to an eighth aspect, an embodiment of this application provides a communication system. The communication system includes a relay device, a first device, and a second device. The relay device is configured to perform the method performed by the relay device in the first aspect, the second aspect, or the third aspect. Certainly, the communication system may include more relay devices, more first devices, or more second device.

According to a ninth aspect, this application provides a computer-readable storage medium. The computer-readable storage medium stores a computer program. When the computer program is run, the method in one or more of the first aspect to the third aspect is implemented.

According to a tenth aspect, a computer program product is provided. The computer program product includes: computer program code, and when the computer program code is run, the method in one or more of the first aspect to the third aspect is performed.

For beneficial effects of the fourth aspect to the tenth aspect and the implementations thereof, refer to the descriptions of the beneficial effects of the first aspect to the third aspect and the implementations thereof.

## BRIEF DESCRIPTION OF DRAWINGS

FIG. 1 is a diagram of an architecture of a communication system to which an embodiment of this application is applicable;

FIG. 2A is a diagram of a structure of a relay device according to an embodiment of this application;

FIG. 2B is a diagram of a structure of a relay device according to an embodiment of this application;

FIG. 3 is a schematic flowchart of a power control method according to an embodiment of this application;

FIG. 4 is a diagram in which an MT module and an RU module use different antennas according to an embodiment of this application;

FIG. 5 is a diagram in which an MT module and an RU module use a same antenna according to an embodiment of this application;

FIG. 6 is a curve chart of an input/output power at each amplification level of a relay device according to an embodiment of this application; and

FIG. 7 is a diagram of another structure of a relay device according to an embodiment of this application.

## DESCRIPTION OF EMBODIMENTS

Technical solutions provided in embodiments of this application may be applied to a new radio (new radio, NR) system, may be applied to a long term evolution (Long term evolution, LTE) system, or may be applied to a next generation mobile communication system, for example, a 6th generation (6th generation, 6G) communication system or another similar communication system. Certainly, the technical solutions provided in this application are further applicable to another possible communication system, for example, a vehicle to everything (vehicle to everything, V2X) system, an internet of things (internet of things, IoT) system, or a narrowband internet of things (narrowband internet of things, NB-IoT) system.

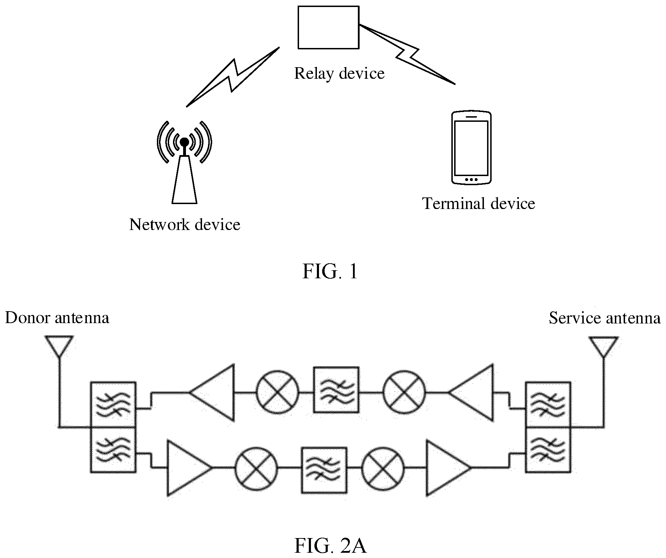

For example, FIG. 1 is a diagram of a network architecture of a communication system to which an embodiment of this application is applicable. The communication system may include a network device, a terminal device, and a relay device. The relay device has signal amplification and forwarding functions, and may forward a signal received from the terminal device to the network device, or may forward a signal received from the network device to the terminal device. Certainly, quantities of network devices, terminal devices, and relay devices in FIG. 1 are merely examples, and there may be fewer or more network devices, terminal devices, and relay devices.

In embodiments of this application, the terminal device is a device having a wireless transceiver function, and may send a signal to the network device, or receive a signal from the network device. The terminal device may include user equipment (user equipment, UE), and is sometimes referred to as a terminal, an access station, a UE station, a remote station, a wireless communication device, a user apparatus, or the like. The terminal device is configured to connect a person, an object, a machine, and the like, may be widely used in various scenarios, and includes, for example, but not limited to terminal devices in the following scenarios: cellular communication, device to device (device to device, D2D), V2X, machine-to-machine/machine-type communication (machine-to-machine/machine-type communication, M2M/MTC), IoT, virtual reality (virtual reality, VR), augmented reality (augmented reality, AR), industrial control (industrial control), self-driving (self-driving), telemedicine (telemedicine), a smart grid (smart grid), smart furniture, smart office, smart wearable, smart transportation, a smart city (smart city), an uncrewed aerial vehicle, and a robot. If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs). The terminal device in this application may be a vehicle-mounted module, a vehicle-mounted assembly, a vehicle-mounted component, a vehicle-mounted chip, or a vehicle-mounted unit that is built in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is built in the vehicle.

In embodiments of this application, the network device may be an access device through which the terminal device accesses a mobile communication system in a wireless manner, and includes, for example, an access network (access network, AN) device. The network device may alternatively be a device that communicates with the terminal device over an air interface. The network device may include an evolved NodeB (evolved NodeB, eNB/e-NodeB) in an LTE system or a long term evolution-advanced (long term evolution-advanced, LTE-A) system; the network device may include a next generation NodeB (next generation NodeB, gNB) in an NR system; the network device may include an access node or the like in a wireless fidelity (wireless-fidelity, Wi-Fi) system; or the network device may be a station (station), a relay station, a vehicle-mounted device, a future evolved public land mobile network (Public Land Mobile Network, PLMN) device, a device in a D2D network, a device in an M2M network, a device in an internet of things IoT network, a network device in a PLMN network, or the like. A specific technology and a specific device form used by the network device are not limited in embodiments of this application.

In embodiments of this application, a communication apparatus configured to implement a function of the network device or the terminal device may be a network device or a terminal device, or may be an apparatus that can support the network device or the terminal device in implementing the function, for example, a chip system. The apparatus may be mounted in the network device or the terminal device. In the technical solutions provided in embodiments of this application, an example in which an apparatus configured to implement the function of the network device is the network device, and an apparatus configured to implement the function of the terminal device is the terminal device is used to describe the technical solutions provided in embodiments of this application.

In this application, the relay device is a device or an apparatus having a signal amplification function and a signal forwarding function, and may forward a signal received from one device to another device. For example, the relay device may amplify a signal received from the network device and forward the amplified signal to the terminal device, or may amplify a signal received from the terminal device and forward the amplified signal to the network device. The relay device may have a capability of receiving and parsing control information from the network device, and the network device may send the control information to the relay device. For example, the control information is used to configure one or more pieces of information of the relay device: an on/off state, a beam direction, a power value, a forwarding gain, an uplink/downlink slot configuration, an operating bandwidth, and the like. The relay device receives the control information, and performs corresponding configuration based on the control information. When the relay device does not have a module configured to receive the control information of the network device, the relay device may be a radio frequency (radio frequency, RF) repeater (RF repeater). When the relay device has a module configured to receive the control information of the network device, the relay device may be a network controlled repeater (network controlled repeater, NCR), or a smart repeater (Smart repeater, SR).

For example, as shown in FIG. 2A, the relay device receives a downlink signal of the network device through a donor antenna (donor antenna), performs operations such as filtering and amplification, and finally forwards an amplified signal to the terminal device through a service antenna (service antenna). The donor antenna may also be referred to as a forward facing antenna, and the service antenna may also be referred to as a rearward facing antenna, a retransmission antenna, or a coverage antenna. This mode may be referred to as a downlink forwarding mode. In the downlink forwarding mode, a channel between the donor antenna and the service antenna may also be referred to as a downlink forwarding channel. In addition, the relay device may receive an uplink signal from the terminal device through the service antenna, then perform operations such as filtering and amplification, and finally forward the amplified signal to the network device through the donor antenna. This mode may be referred to as an uplink forwarding mode. In the uplink forwarding mode, a channel between the service antenna and the donor antenna may also be referred to as an uplink forwarding channel. Optionally, the uplink forwarding channel and the downlink forwarding channel may further include frequency mixers. As shown in FIG. 2A, the uplink forwarding channel is used as an example. The relay device first down-converts a highfrequency signal to an intermediate frequency (or a baseband) through a frequency mixer, performs filtering at the intermediate frequency (or the baseband), then up-converts the signal to a high frequency through a frequency mixer, and then forwards the signal. Optionally, the uplink forwarding channel and the downlink forwarding channel further include power amplifiers, for example, low-noise amplifiers (low-noise amplifiers, LNAs).

It should be noted that the uplink forwarding channel may also be described as an uplink forwarding module. In embodiments of this application, the uplink forwarding channel is used as an example for description. The downlink forwarding channel may also be described as a downlink forwarding module. In embodiments of this application, the downlink forwarding channel is used as an example for description.

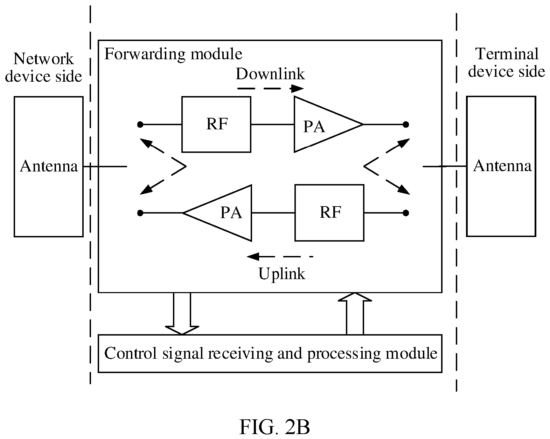

For example, FIG. 2B shows another structure of a relay device. The relay device includes a control signal receiving and processing module, a forwarding module, and antennas. The control signal receiving and processing module is connected to the forwarding module. The forwarding module includes an RF component (for example, a component performing a filtering operation in FIG. 2A) and a power amplifier (power amplifier, PA) that are sequentially connected. When the relay device is in the downlink forwarding mode, the antenna on a network device side is connected to the downlink forwarding channel, and the antenna on a terminal device side is connected to the downlink forwarding channel, so that the relay device forwards downlink information from the network device to the terminal device. When the relay device is in the uplink forwarding mode, the antenna on the network device side is connected to the uplink forwarding channel, and the antenna on the terminal device side is connected to the uplink forwarding channel, so that the relay device forwards uplink information from the terminal device to the network device. The control signal receiving and processing module may receive a control signal sent by the network device, and adjust parameters of the forwarding module through the connection with the forwarding module, for example, an orientation of an antenna beam, a switch of the forwarding module, and an amplification gain of the forwarding module. It should be understood that the forwarding module may also be described as a radio unit (radio unit, RU) module, and the control signal receiving and processing module may also be described as a mobile terminal (mobile terminal, MT) module.

Different powers used by the relay device may cause different interference to a network, and power consumption of the relay device may also be different. In consideration of network interference, the network device may control a power of the relay device, to reduce interference caused by the relay device to the network while meeting a coverage requirement or a data transmission rate requirement. A forwarding power of the relay device generally cannot exceed a maximum forwarding power limit. Similar to a maximum transmit power limit of a common terminal device, the maximum forwarding power limit of the relay device may be determined based on a capability of a radio frequency component of the relay device, may be determined according to a related standard, or may be determined according to a corresponding regulation.

When the network device expects that the forwarding power of the relay device or a forwarding power indicated by the network device to the relay device exceeds the maximum forwarding power limit, the relay device should use the maximum forwarding power limit as an actual forwarding power. However, different from a transmit power of the common terminal device, a transmit power of the relay device is not only related to a gain coefficient of a power amplifier of the relay device, but also related to an input power or a receive power for receiving a signal by the relay device. When a non-linear feature of the power amplifier is not considered, an output power (expressed in dBm) of the relay device may be a sum of the input power (expressed in dBm) for reception and a power gain (expressed in dB). Therefore, when the input power of the relay device for reception is very small, even if a transmit power expected by the network device to be used by the relay device does not exceed the maximum forwarding power limit of the relay device, the output power of the relay device still cannot reach the forwarding power expected or indicated by the network device. As a result, scheduling performance of the network device for the relay device is affected.

Therefore, this application provides a method for determining an actual forwarding power of a relay device, and a relay device. In this application, the relay device may determine, based on a forwarding power (may be referred to as a first forwarding power) that the network device expects the relay device to use, a forwarding power (may be referred to as a second forwarding power) determined based on an input power of the relay device and a forwarding gain of the relay device, and a forwarding power (may be referred to as a third forwarding power) determined based on a maximum forwarding power limit of the relay device, a forwarding power (may be referred to as a target forwarding power) that the relay device actually needs to use. The second forwarding power may also be considered as a forwarding power that can be reached by the relay device by using a maximum forwarding gain under a given input power. In addition to considering the forwarding power expected by the network device and the maximum forwarding power limit of the relay device, the relay device further considers the forwarding power that can be reached by the relay device by using the maximum forwarding gain under the given input power. Therefore, according to the method provided in embodiments of this application, the relay device may output a forwarding power matching a capability of the relay device or matching the forwarding power expected by the network device.

The following describes the technical solutions provided in embodiments of this application with reference to the accompanying drawings.

Embodiments of this application provide a power control method. The method may be applied to a communication system including the relay device. In the following descriptions, the power control method is applied to the communication system shown in FIG. 1. The power control method provided in embodiments of this application may be applied to uplink transmission, or may be applied to downlink transmission. It should be understood that the uplink transmission and the downlink transmission are relative. For example, transmission from the terminal device to the relay device and then to the network device is the uplink transmission, and transmission from the network device to the relay device and then to the terminal device is the downlink transmission. In this application, the relay device may be a communication apparatus configured to implement a function of the relay device, or may be an apparatus that can support the relay device in implementing the function, for example, a chip system. The apparatus may be mounted in the relay device. In the technical solutions provided in this application, an example in which the apparatus configured to implement the function of the relay device is the relay device is used to describe the technical solutions provided in embodiments of this application.

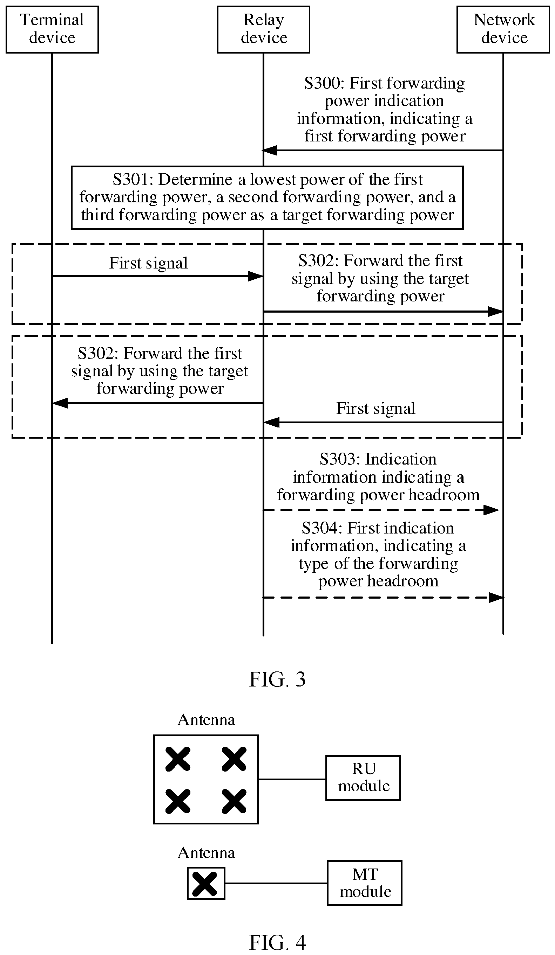

For example, FIG. 3 is a schematic flowchart of a power control method according to an embodiment of this application. In the following descriptions, an example in which the power control method is performed by a relay device is used. When a first device in the following descriptions is a terminal device, a second device is a network device. When the first device is a network device, the second device is a terminal device. In this embodiment of this application, an association relationship may also be understood as a correspondence or a mapping relationship. That A is associated with B may be understood as that A corresponds to B or A may be mapped to B.

S301: The relay device determines a lowest power of a first forwarding power, a second forwarding power, and a third forwarding power as a target forwarding power.

S302: The relay device forwards, by using the target forwarding power, a first signal received from the first device to the second device.

The first forwarding power is determined based on an indication of the network device. It may also be considered that the first forwarding power is a forwarding power that the network device expects the relay device to use. The second forwarding power is related to an input power of the relay device and a forwarding gain of the relay device. It may also be considered that the second forwarding power is a forwarding power that can be reached by the relay device by using a maximum forwarding gain under a given input power. The third forwarding power is determined based on a maximum forwarding power limit of the relay device. The relay device may use the lowest power of the first forwarding power, the second forwarding power, and the third forwarding power as a power for forwarding the first signal, that is, the target forwarding power. Because the relay device considers the forwarding power expected by the network device, the maximum forwarding power limit of the relay device, and an output power of the relay device that can be determined based on the input power of the relay device and the forwarding gain of the relay device, the relay device may output a forwarding power matching a capability of the relay device or matching the forwarding power expected by the network device.

After determining the target forwarding power, the relay device forwards, by using the target forwarding power, the first signal received from the first device to the second device. As shown in FIG. 3, the first device is the terminal device, and the second device is the network device. The relay device receives a first signal from the terminal device, and forwards the first signal to the network device by using the target forwarding power. The first device is the network device, and the second device is the terminal device. The relay device receives a first signal from the network device, and forwards the first signal to the terminal device by using the target forwarding power.

Optionally, the network device may indicate, to the relay device, a time unit in which the first signal is located, that is, an effective time range in which the relay device determines to use the target forwarding power.

The following sequentially describes how the relay device determines the first forwarding power, the second forwarding power, and the third forwarding power. For ease of description, in the following, the first forwarding power is denoted as P1, the second forwarding power is denoted as P2, the third forwarding power is denoted as P3, and the target forwarding power is denoted as Pout. It may be understood that Pout=min(P1, P2, P3). A first forwarding gain is denoted as G1. An example in which the relay device forwards the first signal is used. A bandwidth of the first signal is referred to as a first bandwidth. In this embodiment of this application, a unit frequency domain unit may be a unit hertz (Hz), a single resource block (resource block, RB), a single subcarrier, or the like. "B" in the following is the first bandwidth. "dBm" may be used to represent a power, and P1, P2, and P3 may all be represented by dBm. When a deviation of P1, P2, or P3 is adjusted, a unit may be represented by dB.

The network device may indicate the first forwarding power to the relay device by using first forwarding power indication information. In other words, before S301, S300 may be performed. The network device sends the first forwarding power indication information to the relay device. Correspondingly, the relay device receives the first forwarding power indication information sent by the network device. The first forwarding power indication information may indicate the first forwarding power.

The first forwarding power indication information may be indicated by using one or more of downlink control information (Downlink control information, DCI) or medium access control (Medium access control, MAC) control element (Control element, CE) radio resource control (radio resource control, RRC) signaling. The first forwarding power indication information may be carried in one piece of signaling, or may be carried in a plurality of pieces of signaling. It should be noted that a specific name of the first forwarding power indication information is not limited in this embodiment of this application. The first forwarding power indication information includes information indicating the first forwarding power. The first forwarding power indication information may directly or indirectly indicate the first forwarding power. There are a plurality of indication manners in which the first forwarding power indication information indicates the first forwarding power. Correspondingly, there are a plurality of manners in which the relay device determines the first forwarding power based on the first forwarding power indication information. A specific manner to be used is not limited in this embodiment of this application and is more flexible.

**Determining manner 1:** The first forwarding power indication information may indicate a quantized value of the first forwarding power. The relay device receives the indication information, and may determine the first forwarding power, which is simple. There are the following several indication manners in which the first forwarding power indication information indicates the quantized value of the first forwarding power.

Indication manner 1: The network device may dynamically indicate the quantized value of the first forwarding power to the relay device by using physical layer signaling, for example, DCI.

Indication manner 2: The first forwarding power indication information includes indication information of one time unit. A forwarding power in the time unit is the first forwarding power. The relay device receives the indication information of the time unit, and may determine the forwarding power in the time unit as the first forwarding power. For example, a time unit X is used as an example, and a forwarding power in the time unit X is P5. The network device may send, to the relay device, indication information indicating the time unit X, and the relay device receives the indication information and may determine that the first forwarding power P1 is P5.

Optionally, the network device may preconfigure, configure, or predefine an association relationship between one or more forwarding powers and a time unit for the relay device. For example, the association relationship is configured by using RRC signaling. For example, the network device indicates a time unit of one or more periodicities to the relay device, where a time unit of each periodicity is associated with one forwarding power. The relay device determines the first forwarding power based on a forwarding power value in a current time unit.

Indication manner 3: The first forwarding power indication information includes an index associated with the first forwarding power. For example, the network device preconfigures (or configures) or predefines a plurality of forwarding powers for the relay device, and each forwarding power is associated with one index. In other words, the network device preconfigures (or configures) or predefines an association relationship between the plurality of forwarding powers and a plurality of indexes for the relay device. In this case, the network device may indicate the first forwarding power to the terminal device by using the index associated with the first forwarding power, to reduce signaling overheads. For example, the network device may preconfigure the association relationship between the plurality of forwarding powers and the plurality of indexes by using RRC signaling. Before the relay device forwards the first signal, the network device may dynamically indicate one index, for example, a third index, by using physical layer signaling, for example, DCI. A forwarding power associated with the third index is P4, and the relay device determines that the first forwarding power is P4 based on the third index and the association relationship.

Optionally, the plurality of indexes may alternatively be associated with one or more other parameters, for example, a beam, a time unit, or a time unit set. Considering that in different time units, the network device expects the relay device to serve terminal devices in different beam directions, and power control parameters in different beam directions are different. For example, there are other network devices or other terminal devices on some beams, and the relay device should use small forwarding powers on the beams. Therefore, when one index is simultaneously associated with a beam, a time unit, and a power parameter, the network device may control a beam, an occupied time unit, and a power of the relay device by using the index, to reduce control signaling overheads.

Optionally, the network device may further indicate a power deviation to the relay device, to adjust the first forwarding power. For example, based on any one of the foregoing three indication manners, the network device may further send indication information of the power deviation by using physical layer signaling, for example, DCI, and the relay device adjusts the determined first forwarding power based on the indication information of the power deviation, where an adjusted first forwarding power is a first forwarding power finally determined by the terminal device. The indication manner 2 is used as an example. The relay device determines, based on the time unit X indicated by the network device, that the first forwarding power is the forwarding power corresponding to the time unit X. The indication manner 2 is still used as the example. The network device further sends indication information of a power deviation $\Delta 2$ to the relay device, and the relay device may determine that P1=P5+$\Delta 2$. $\Delta 2$ may be a positive number or a negative number.

**Determining manner 2:** The first forwarding power indication information includes second indication information and third indication information. The second indication information indicates the first bandwidth, and the third indication information indicates a first forwarding power spectral density. The first forwarding power spectral density is a forwarding power that is expected by the network device and that is of the relay device on the unit frequency domain unit. The relay device may determine the first forwarding power based on the first bandwidth and the first forwarding power spectral density.

For example, the first forwarding power may satisfy a formula: $P1=PSD1+10\times\log_{10}(B)+C$ [dBm]. PSD1 is the first forwarding power spectral density, B is the first bandwidth, and C is a parameter affecting power control. For example, it is considered that a higher modulation order of a signal indicates a higher signal-to-noise ratio required for demodulation and a higher requirement on a forwarding power. Correspondingly, C may be a parameter determined based on a specific modulation order of the first signal. C may be predefined or preconfigured, or C may be dynamically indicated by the network device or C is determined by the relay device. If the first forwarding power spectral density is a forwarding power on a single RB, correspondingly, B also uses an RB as a basic unit, that is, a quantity of RBs included in B. If the first forwarding power spectral density is a forwarding power on a single unit Hz, correspondingly, B also uses Hz as a basic unit. It may be understood that when a definition of a unit frequency domain unit in the first forwarding power spectral density is different from a definition of a unit frequency domain unit in the first bandwidth, the first bandwidth needs to be converted. For example, when a subcarrier bandwidth of the first signal is configured as $\mu$, the first forwarding power may satisfy a formula: $P1=PSD1+10\times\log 10(2^{\mu}B)+C$ [dBm].

The second indication information and the third indication information may be carried in one piece of signaling or may be carried in different pieces of signaling. For example, that the network device sends the first forwarding power indication information to the relay device may be that the network device separately sends the second indication information and the third indication information to the relay device, or may be that the network device sends the second indication information and the third indication information to the relay device together.

Similar to the determining manner 1 in which the first forwarding power indication information indicates the quantized value of the first forwarding power, there are also a plurality of indication manners in which the second indication information indicates the first bandwidth, and there are also a plurality of indication manners in which the third indication information indicates the first forwarding power spectral density. For example, the plurality of indication manners include but are not limited to the following indication manners.

Indication manner 1: The network device may dynamically indicate a quantized value of the first bandwidth to the relay device by using physical layer signaling, for example, DCI. In other words, the second indication information may be the DCI and includes the quantized value of the first bandwidth. Similarly, the third indication information may be the DCI and includes a quantized value of the first forwarding power spectral density.

Indication manner 2: The second indication information includes indication information of one time unit. The first bandwidth is a bandwidth of the first signal in the time unit. The relay device receives the second indication information, and may determine, based on the time unit indicated by the second indication information, the first bandwidth as the first bandwidth in the time unit. For example, a time unit Y is used, and a signal bandwidth in the time unit Y is B1. The second indication information includes indication information of the time unit Y, and the relay device determines that the first bandwidth is B1. Similarly, the third indication information also includes indication information of a 1st time unit, and the relay device determines that the first forwarding power spectral density is a forwarding power spectral density in the time unit.

Optionally, the network device may preconfigure, configure, or predefine an association relationship between one or more bandwidths (and/or forwarding power spectral densities) and a time unit for the relay device. For example, the network device indicates a time unit of one or more periodicities to the relay device, where a time unit of each periodicity is associated with one bandwidth (and/or forwarding power spectral density). The relay device determines the first bandwidth based on a bandwidth associated with a current time unit, and determines the first forwarding power spectral density based on a forwarding power spectral density associated with a current time unit.

Indication manner 3: The second indication information includes an index associated with the first bandwidth. For example, the network device preconfigures (or configures) or predefines an association relationship between a plurality of bandwidths and a plurality of indexes for the relay device. The relay device may determine the first bandwidth based on the index carried by the second indication information and the association relationship. Similarly, the third indication information includes an index associated with the first forwarding power spectral density. For example, the network device preconfigures (or configures) or predefines an association relationship between a plurality of forwarding power spectral densities and a plurality of indexes for the relay device. The relay device may determine the first forwarding power spectral density based on the index carried by the third indication information and the association relationship.

Optionally, the foregoing different indication manners may be used for the second indication information and the third indication information. For example, the network device indicates the quantized value of the first bandwidth by using physical layer signaling (namely, the indication manner 1). For another example, the association relationship between the plurality of indexes and the plurality of forwarding power spectral densities is configured by using higher layer signaling, and then an index is indicated by using physical layer signaling. The relay device determines, by using the index, that a forwarding power spectral density associated with the index is the first forwarding power spectral density (namely, the indication manner 3).

Optionally, the index included in the second indication information and the index included in the third indication information may be a same index. In other words, one index is associated with both one bandwidth and one forwarding power spectral density. For ease of description, the bandwidth and the forwarding power spectral density may be used as a group of parameters. For example, the network device may preconfigure or predefine an association relationship (for example, referred to as a first mapping relationship) between a plurality of groups of parameters and a plurality of indexes for the relay device. In this case, the network device may indirectly indicate the first bandwidth and the first forwarding power spectral density to the relay device by using one index, to reduce signaling overheads. For example, a group of parameters in the plurality of groups of parameters includes the first bandwidth and the first forwarding power spectral density, and an index associated with the group of parameters is a first index. The network device may send the first index to the relay device, and the relay device determines the first bandwidth and the first forwarding power spectral density based on the first index and the first mapping relationship, to determine the first forwarding power.

Optionally, an index associated with each group of parameters may also be associated with one or more other parameters, for example, a beam, a time unit, or a time unit set. In this case, the network device may control a beam, an occupied time unit, and a power of the relay device by using one index, to reduce control signaling overheads.

Similar to the determining manner 1, for the first bandwidth, the network device may also indicate a bandwidth deviation to the relay device, to adjust the first bandwidth. The relay device adjusts the initially determined first bandwidth based on the bandwidth deviation, where an adjusted first bandwidth is a first bandwidth finally determined by the relay device. For example, the final first bandwidth is a sum of the initially determined first bandwidth and the bandwidth deviation. Similarly, for the first forwarding power spectral density, the network device may also indicate a forwarding power spectral density deviation to the relay device. The relay device adjusts the determined first forwarding power spectral density based on the forwarding power spectral density deviation, where an adjusted first forwarding power spectral density is a first forwarding power spectral density finally determined by the relay device. For example, the final first forwarding power spectral density is a sum of the initially determined first forwarding power spectral density and the forwarding power spectral density deviation.

It may be understood that if C is not predefined or preconfigured, or is not determined by the relay device, the network device may further send, to the relay device, indication information indicating C. It should be noted that the indication information indicating the first bandwidth, the indication information indicating the first forwarding power spectral density, and the indication information indicating C may be carried in one piece of signaling, or may be respectively carried in different pieces of signaling. This is not limited in this embodiment of this application. In addition, the network device may directly indicate C, or may indirectly indicate C. For example, the network device may indicate A and B to the relay device, and the relay device determines C based on A and B. For example, C=A+B.

**Determining manner 3:** The first forwarding power indication information may include fifth indication information, and the fifth indication information indicates a first target receive power. The relay device determines the first forwarding power based on the first target receive power and a first path loss. In a downlink forwarding mode, the relay device needs to receive and amplify a signal of the network device and forward the amplified signal to the terminal device.

In this case, the second device is the terminal device, and the first path loss is a path loss between the relay device and the terminal device. In an uplink forwarding mode, the relay device needs to receive and amplify a signal of the terminal device and forward the amplified signal to the network device. In this case, the second device is the network device, and the first path loss is a path loss between the relay device and the network device. The first target receive power is a receive power expected by the second device for the first signal. Because the relay device considers the first path loss, the determined first forwarding power is more accurate.

For example, the first forwarding power P1 satisfies: $P1=P6+\alpha \times PL+C$. P6 is the first target receive power, PL is the first path loss, and C is a parameter affecting power control. For details about C, refer to the related content in the determining manner 2. Details are not described herein again. $\alpha$ may be preconfigured by the network device, or may be dynamically configured by the network device by using RRC signaling. A specific configuration manner of $\alpha$ is not limited in this embodiment of this application. For example, the network device may configure $\alpha$ by using an index. For another example, $\alpha$ is configured to be equal to 1 by default.

Similar to the determining manner 1 in which the first forwarding power indication information indicates the quantized value of the first forwarding power, there may be the following several indication manners in which the fifth indication information indicates the first target receive power.

Indication manner 1: The network device may dynamically indicate a quantized value of the first target receive power to the relay device by using physical layer signaling, for example, DCI. In other words, the fifth indication information may be the DCI and includes the quantized value of the first target receive power.

Indication manner 2: The fifth indication information includes indication information of one time unit. The first target receive power is a target receive power in the time unit. The relay device receives the indication information of the time unit, and may determine that the target receive power in the time unit is the first target receive power.

Optionally, the network device may preconfigure, configure, or predefine an association relationship between one or more target receive powers and a time unit for the relay device. For example, the network device indicates a time unit of one or more periodicities to the relay device, where a time unit of each periodicity is associated with one target receive power. The relay device determines the first target receive power based on a target receive power associated with a current time unit.

Indication manner 3: The fifth indication information includes an index associated with the first target receive power. For example, the network device preconfigures (or configures) or predefines an association relationship between a plurality of target receive powers and a plurality of indexes for the relay device. The relay device may determine the first target receive power based on the index carried by the fifth indication information and the association relationship.

Similarly, the indexes associated with the plurality of target receive powers may be further associated with one or more other parameters, for example, a beam, a time unit, or a time unit set.

Optionally, the network device may also indicate a receive power deviation to the relay device, to adjust the first target receive power. The relay device adjusts the initially determined first target receive power based on the receive power deviation, where an adjusted first target receive power is a first target receive power finally determined by the relay device. For example, the final first target receive power is a sum of the initially determined first target receive power and the receive power deviation.

In a possible implementation, the first path loss may be indicated by the network device. For example, the network device may send path loss indication information to the relay device, where the path loss indication information may indicate the first path loss. The path loss indication information and the fifth indication information may be carried in one piece of signaling or may be respectively carried in different pieces of signaling. This is not limited in this embodiment of this application. Similar to a case that the second indication information indicates the first bandwidth, there are also the following three indication manners in which the path loss indication information indicates the first path loss.

Indication manner 1: The path loss indication information may include a value of the first path loss. The relay device receives the path loss indication information, and may determine the first path loss.

Indication manner 2: The path loss indication information may include indication information of one time unit, and the first path loss is a path loss in the time unit. The relay device receives the indication information of the time unit, and may determine that the first path loss is the path loss in the time unit.

Optionally, the network device may preconfigure, configure, or predefine an association relationship between one or more path losses and a time unit for the relay device. For example, the network device indicates a time unit of one or more periodicities to the relay device, where a time unit of each periodicity is associated with one path loss. The relay device determines the first path loss based on a path loss associated with a current time unit.

Indication manner 3: The path loss indication information includes an index associated with the first path loss. For example, the network device preconfigures (or configures) or predefines an association relationship between a plurality of path losses and a plurality of indexes for the relay device. The relay device may determine the first path loss based on the index carried by the path loss indication information and the association relationship.

Optionally, the network device may also indicate a path loss deviation to the relay device, to adjust the first path loss. The relay device adjusts the initially determined first path loss based on the path loss deviation, where an adjusted first path loss is a first path loss finally determined by the relay device. For example, the final first path loss is a sum of the initially determined first path loss and the path loss deviation.

Optionally, the index included in the path loss indication information and the index included in the fifth indication information (when the manner 3 is used) may be a same index. In other words, one index may be associated with one path loss value, and may also be associated with one target receive power. In this case, the network device may indicate both path loss information and target receive power information by using one index.

Optionally, the foregoing different indication manners may be used for the fifth indication information and the path loss indication information. For example, the network device indicates the target receive power in the manner 1, and indicates the path loss in the manner 3.

In another possible implementation, the second device may send, to the relay device, a reference signal (for example, referred to as a first reference signal) used to determine the first path loss, and the relay device measures the first reference signal to determine the first path loss. For example, the relay device may determine the first path loss based on a transmit power of the first reference signal and a receive power of the first reference signal. The first reference signal may be a non-zero power channel state information reference signal (Non-zero power channel state information reference signal, NZP-CSI-RS), may be a physical broadcast channel block (Synchronization signal/Physical broadcast channel block, SSB), or may be an SRS. It may be understood that during uplink forwarding, the first reference signal may be the NZP-CSI-RS or the SSB, and during downlink forwarding, the first reference signal may be the SRS.

The transmit power of the first reference signal may be indicated by the network device. For example, the network device may send configuration information of the first reference signal to the relay device, where the configuration information may include information such as an identifier, time-frequency position information, a used sequence, and a transmit power P7 of the first reference signal. Then, the network device sends the first reference signal to the relay device, and the relay device receives the first reference signal at a time-frequency position of the first reference signal, and measures the first reference signal, to determine a receive power P8 of the first reference signal. It can be learned that when P7 and P8 are represented by dBm, and a path loss is represented by dB, the first path loss PL=P7-P8.

In this embodiment of this application, a specific implementation in which the network device sends the first reference signal to the relay device is similar to a case that the second indication information indicates the first bandwidth. For example, the network device may send identification information of the first reference signal to the relay device. For another example, the network device may send indication information including one time unit to the relay device, to indicate that the first reference signal is a reference signal in the time unit. For still another example, the network device preconfigures, configures, or predefines a relationship between a plurality of reference signals and a plurality of indexes for the relay device, and the network device sends an index of the first reference signal to the relay device, to indicate the first reference signal.

Generally, the relay device receives and measures a reference signal by using an MT module, and receives, amplifies, and forwards a to-be-forwarded signal by using an RU module. Therefore, that the relay device receives and measures the first reference signal may be understood as that the relay device receives and measures the first reference signal by using the MT module.

When an antenna used by the MT module in the relay device is different from an antenna used by the RU module configured to forward and process a signal, a gain of the antenna corresponding to the MT module may be different from a gain of the antenna corresponding to the RU module. Therefore, the relay device determines the first path loss based on the transmit power of the first reference signal, the receive power of the first reference signal, and a first gain. The first gain is a difference between a gain of a first antenna and a gain of a second antenna. The first antenna is an antenna corresponding to the MT module, the second antenna is an antenna corresponding to the RU module, and A [dB] is obtained by subtracting the gain of the second antenna from the gain of the first antenna. Because the first path loss is essentially a path loss between the antenna corresponding to the RU module in the relay device and the second device, in this case, the first path loss PL may satisfy PL=P7-P8-A [dB]. It should be noted that, in this embodiment of this application, a gain of an antenna includes an array gain of the antenna, a directivity gain of each antenna element, and another gain. For example, FIG. 4 is a diagram in which the MT module and the RU module use different antennas. In FIG. 4, an example in which an antenna used by the MT module includes only one dual-polarized antenna element, and an antenna used by the RU module includes four dual-polarized antenna elements is used. When all the antenna elements are the same, an antenna gain of the MT module is 6 dB less than an antenna gain of the RU module, that is, A=-6 dB. In this case, the relay device adds 6 dB based on the original path loss calculation method. A may be determined by the relay device or may be indicated by the network device to the relay device. The relay device may alternatively report A to the network device.

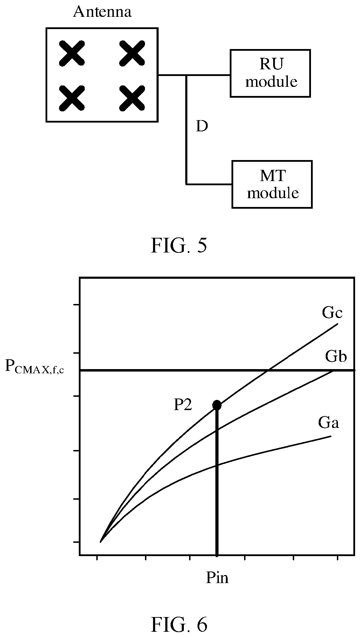

When the MT module and the RU module in the relay device use a same antenna, the relay device may receive and measure the first reference signal when receiving and forwarding a signal. Therefore, a part of the received signal needs to be coupled to the MT module. Therefore, the relay device determines the first path loss based on the transmit power of the first reference signal, the receive power of the first reference signal, and a first coefficient, where the first coefficient is a coefficient of signal energy inputted into the MT module relative to total received signal energy. As shown in FIG. 5, for example, the coefficient of the signal energy inputted into the MT module relative to the total received signal energy is D (D<0 dB, for example, D=-10 dB), and the first path loss PL may satisfy:

$$PL = P7 - P8 + 10 \log_{10} \left( \frac{1 - 10^{0.1D}}{10^{0.1D}} \right) \text{ [dB]}$$

. When an absolute value of D is large, the relay device may also approximately determine that PL=P7-P8-D [dB]. D may be determined by the relay device or may be indicated by the network device to the relay device. The relay device may alternatively report D to the network device.

**Determining manner 4:** The first forwarding power indication information includes second indication information and fourth indication information, the second indication information indicates the first bandwidth, and the fourth indication information indicates a first target receive power spectral density. In this case, the relay device determines the first forwarding power based on the first target receive power spectral density, the first bandwidth, and a first path loss. The first target receive power spectral density is a target receive power spectral density expected by the second device. The first path loss is a path loss between the relay device and the second device. In a downlink forwarding mode, the relay device needs to receive and amplify a signal of the network device and forward the amplified signal to the terminal device. In this case, the second device is the terminal device. In an uplink forwarding mode, the relay device needs to receive and amplify a signal of the terminal device and forward the amplified signal to the network device. In this case, the second device is the network device.

For example, the first forwarding power P1 satisfies: P1=PSD2+10×$\log_{10}$(B)+C+PL [dBm]. PSD2 is the first target receive power spectral density, B is the first bandwidth, PL is the first path loss, and C is a parameter affecting power control. For details about C, refer to the related content in the determining manner 2. Details are not described herein again. If the first target receive power spectral density is a forwarding power on a single RB, correspondingly, B also uses an RB as a basic unit, that is, a quantity of RBs included in B. If the first target receive power spectral density is a forwarding power on a single unit Hz, correspondingly, B also uses Hz as a basic unit. It may be understood that when a definition of a unit frequency domain unit in the first target receive power spectral density is different from a definition of a unit frequency domain unit in the first bandwidth, the first bandwidth needs to be converted. For example, when a subcarrier bandwidth of the first signal is configured as μ, the first forwarding power may satisfy a formula: P1=PSD2+10×$\log_{10}$($2^\mu$B)+C+PL [dBm].

Optionally, the first forwarding power P1 satisfies: P1=PSD2+10×$\log_{10}$(B)+C+α×PL [dBm]. For details about α, refer to the related content in the determining manner 3. Details are not described herein again. For a determining manner for the path loss, refer to the related content in the determining manner 3. Details are not described herein again.

For a specific implementation of the second indication information, refer to the related content in the determining manner 2. Details are not described herein again. Similar to a case that the second indication information indicates the first bandwidth, there are also the following three indication manners in which the fourth indication information indicates the first target receive power spectral density.

Indication manner 1: The fourth indication information may include a quantized value of the first target receive power spectral density. The relay device receives the fourth indication information, and may determine the first target receive power spectral density, which is simple.

Indication manner 2: The fourth indication information may include indication information of one time unit, and the first target receive power spectral density is a target receive power spectral density in the time unit. The relay device receives the fourth indication information, and may determine, based on the time unit indicated by the fourth indication information, that the first target receive power spectral density is the target receive power spectral density in the time unit.

Optionally, the network device may preconfigure, configure, or predefine an association relationship between one or more target receive power spectral densities and a time unit for the relay device. For example, the network device indicates a time unit of one or more periodicities to the relay device, where a time unit of each periodicity is associated with one target receive power spectral density. The relay device determines the first target receive power spectral density based on a target receive power spectral density associated with a current time unit.

Indication manner 3: The fourth indication information includes an index associated with the first target receive power spectral density. For example, the network device preconfigures (or configures) or predefines an association relationship between a plurality of target receive power spectral densities and a plurality of indexes for the relay device. The relay device may determine the first target receive power spectral density based on the index carried by the fourth indication information and the association relationship.

Optionally, the indexes associated with the plurality of target receive power spectral densities may be further associated with one or more other parameters, for example, a beam, a time unit, or a time unit set.

Optionally, the network device may also indicate a receive power spectral density deviation to the relay device, to adjust the first target receive power spectral density. The relay device adjusts the initially determined first target receive power spectral density based on the receive power spectral density deviation, where an adjusted first target receive power spectral density is a first target receive power spectral density finally determined by the relay device. For example, the final first target receive power spectral density is a sum of the initially determined first target receive power spectral density and the receive power spectral density deviation.

**Determining manner 5:** The first forwarding power indication information includes indication information of the first forwarding gain. The relay device may determine the first forwarding power based on the first forwarding gain and a first receive power. The first forwarding gain is a gain of a forwarding power of the relay device for the first signal relative to a receive power of the first signal. The first receive power is the receive power at which the relay device receives the first signal or is used to determine the receive power at which the relay device receives the first signal. For example, the first forwarding power is a sum of the first receive power (denoted as Pin) and the first forwarding gain (denoted as G1). Because the relay device may control a forwarding power by using a forwarding gain in a forwarding process, indicating the forwarding gain to the relay device helps the relay device determine a working manner in advance.

Similar to a case that the second indication information indicates the first bandwidth, there are also the following three indication manners in which the first forwarding power indication information indicates the first forwarding gain.

Indication manner 1: The first forwarding power indication information includes a quantized value of the first forwarding gain, and the relay device determines the first forwarding gain based on the quantized value.

Indication manner 2: The first forwarding power indication information includes indication information of one time unit, and the first forwarding gain is a forwarding gain in the time unit. The relay device receives the first forwarding power indication information, and may determine that the forwarding gain in the time unit is the first forwarding gain. For example, a time unit U is used, a forwarding gain in the time unit U is G3, and G1=G3.

Optionally, the network device may preconfigure, configure, or predefine an association relationship between one or more forwarding gains and a time unit for the relay device. For example, the network device indicates a time unit of one or more periodicities to the relay device, where a time unit of each periodicity is associated with one forwarding gain. The relay device determines the first forwarding gain based on a forwarding gain associated with a current time unit. For example, the relay device determines that the first forwarding gain is the forwarding gain associated with the current time unit.

Indication manner 3: The first forwarding power indication information includes an index associated with the first forwarding gain. For example, the network device preconfigures (or configures) or predefines an association relationship between a plurality of forwarding gains and a plurality of indexes for the relay device. The relay device may determine the first forwarding gain based on the index carried by the first forwarding power indication information and the association relationship.

Optionally, an index associated with each forwarding gain may also be associated with one or more other parameters, for example, a beam, a time unit, or a time unit set.

Optionally, the network device may also indicate a forwarding gain deviation to the relay device, to adjust the first forwarding gain. The relay device adjusts the initially determined first forwarding gain based on the forwarding gain deviation, where an adjusted first forwarding gain is a first forwarding gain finally determined by the relay device. For example, the final first forwarding gain is a sum of the initially determined first forwarding gain and the forwarding gain deviation. The indication manner 2 is used as an example. To be specific, the network device indicates G1=G2 to the relay device, the network device may further indicate a deviation $\Delta 3$ to the relay device, and the relay device may determine that G1=G2+$\Delta 3$. $\Delta 3$ may be a positive number or a negative number.

In a possible implementation, the network device may indicate the first receive power to the relay device. That the network device indicates the first receive power to the relay device includes but are not limited to the following five indication manners.

Indication manner 1: The network device sends indication information of a quantized value of the first receive power to the relay device. The relay device receives the indication information, and determines the first receive power. For example, the network device may obtain a path loss between the network device and the relay device through measurement in advance, then estimate the first receive power based on the determined path loss and a transmit power for sending a signal, and send the first receive power to the relay device.

Indication manner 2: The network device sends indication information including one time unit to the relay device, and a receive power in the time unit is the first receive power. Optionally, the network device may preconfigure, configure, or predefine an association relationship between one or more receive powers and a time unit for the relay device. For example, the network device indicates a time unit of one or more periodicities to the relay device, where a time unit of each periodicity is associated with one receive power. The relay device determines the first receive power based on a receive power associated with a current time unit. For example, the relay device determines that the first receive power is the receive power associated with the current time unit.

Indication manner 3: The network device preconfigures (or configures) or predefines an association relationship (for example, referred to as a fourth mapping relationship) between a plurality of receive powers and a plurality of indexes for the relay device. In this case, the network device may indicate the first receive power to the relay device by using one index, to reduce signaling overheads. For example, the network device sends indication information including a fourth index to the relay device, and the relay device may determine, based on the fourth index and the fourth mapping relationship, that the first receive power is a receive power associated with the fourth index.

Optionally, the indexes associated with the plurality of receive powers may be further associated with one or more other parameters, for example, a beam, a time unit, or a time unit set.

Optionally, the network device may also indicate a receive power deviation to the relay device, to adjust the first receive power. The relay device adjusts the initially determined first receive power based on the receive power deviation, where an adjusted first receive power is a first receive power finally determined by the relay device. For example, the final first receive power is a sum of the initially determined first receive power and the receive power deviation.

Indication manner 4: The network device indirectly indicates the first receive power by indicating, to the relay device, the first bandwidth and a reference signal (for example, referred to as a second reference signal) used to determine the first receive power. For example, the network device may send second indication information, identification information of the second reference signal, and time-frequency position information of the second reference signal to the relay device. The relay device receives the second reference signal at a time-frequency position of the second reference signal, measures the second reference signal, to obtain an RSRP of the second reference signal, and determines the first receive power based on the RSRP of the second reference signal and the first bandwidth. For example, the first receive power Pin1 satisfies: Pin1=RSRP+10log$_{10}$(B) [dBm]. The RSRP is the RSRP of the second reference signal, and B is the first bandwidth. For a specific implementation in which the network device indicates the second reference signal to the relay device, refer to the foregoing specific implementation in which the network device indicates the first reference signal to the relay device. Details are not described herein again.

It may be understood that the relay device receives and measures the second reference signal by using the MT module. Therefore, when an antenna used by the MT module is different from an antenna used by the RU module, the relay device may determine the first receive power based on the RSRP (denoted as an RSRP 2) of the second reference signal, a first gain (the foregoing A [dB]), and the first bandwidth. For example, the first receive power is Pin1=RSRP2+10log$_{10}$ (B)-A, where because the RSRP is a power on a single RE, a unit of B is a quantity of subcarriers.

When the antenna used by the MT module is the same as the antenna used by the RU module, the relay device may determine the first receive power based on the RSRP (denoted as the RSRP 2) of the second reference signal, a coupling coefficient (the foregoing D), and the first bandwidth. For example, the first receive power

$$\text{Pin1}=\text{RSRP2}+10\log_{10}(\text{B})+10\log_{10}\left(\frac{1-10^{0.1\text{D}}}{10^{0.1\text{D}}}\right) \text{ or Pin1=RSRP2+10log}_{10}\text{(B)-D.}$$

Indication manner 5: The first forwarding power indication information includes second indication information and sixth indication information, the second indication information indicates the first bandwidth, and the sixth indication information indicates a first receive power spectral density. The first receive power spectral density is a receive power that is expected by the network device and that is of the relay device on the unit frequency domain unit. The relay device determines the first receive power based on the first receive power spectral density and the first bandwidth.

For example, the first receive power Pin1 satisfies: Pin1=PSD3+10×log$_{10}$(B)+E [dB]. PSD3 is the first receive power spectral density, B is the first bandwidth, and E is a parameter affecting power control. E may be a predefined, preconfigured, or agreed value, E may be configured by the network device, or E is determined by the relay device.

The second indication information and the sixth indication information may be carried in one piece of signaling or may be carried in different pieces of signaling. For example, that the network device sends the first forwarding power indication information to the relay device may be that the network device separately sends the second indication information and the sixth indication information to the relay device, or may be that the network device sends the second indication information and the sixth indication information to the relay device together. For a specific implementation of the second indication information, refer to the related content in the determining manner 1. Details are not described herein again. It should be noted that the indication information indicating the first bandwidth, the indication information indicating the first receive power spectral density, and the indication information indicating E may be carried in one piece of signaling, or may be respectively carried in different pieces of signaling. This is not limited in this embodiment of this application. In addition, the network device may directly indicate E, or may indirectly indicate E. For example, the network device may indicate γ and η to the relay device, and the relay device determines E based on γ and η. For example, E=γ+η.

An indication manner in which the sixth indication information indicates the first receive power spectral density is similar to the indication manner in which the fourth indication information indicates the first target receive power spectral density. For details, refer to the foregoing indication manner in which the fourth indication information indicates the first target receive power spectral density. Details are not described herein again.

In a possible implementation, the network device does not need to indicate the first receive power to the relay device, and the relay device measures the first signal in a time subunit in a time unit for forwarding the first signal, to determine the first receive power. For example, the relay device measures a signal sent in a first time subunit, and determines the first receive power based on an obtained measurement result. The first time subunit belongs to a first time unit, a start location of the first time subunit is the same as a start location of the first time unit, and the first time unit is a time unit in which the first signal is located. Optionally, the first time subunit may alternatively be located at another location in the first time unit. Alternatively, the first time subunit is located before the first time unit. For example, an end location of the first time subunit is located before the start location of the first time unit. For another example, the end location of the first time subunit is the same as the start location of the first time unit.

Optionally, the network device may further indicate a deviation Δ5 to the relay device, so that the relay device adjusts the determined first receive power. A first receive power finally determined by the relay device is a sum of the initially determined first receive power and the deviation. For example, the first receive power Pin1 satisfies: Pin1=Pin1_1+Δ5. Pin1_1 is the first receive power initially determined by the relay device, and Pin1 is the first receive power finally determined by the relay device. Δ5 may be a positive number or a negative number.

In this embodiment of this application, the relay device may determine the second forwarding power in one or more of the following determining manners. Which one or more determining manners are actually used is not limited in this embodiment of this application.

The relay device may determine the second forwarding power based on a second receive power (denoted as Pin2). The second receive power may be an input power of the relay device. For a manner in which the relay device determines the second receive power, refer to any one of the foregoing manners in which the relay device determines the first receive power. In other words, any manner of determining the first receive power is also applicable to determining the second receive power. For example, the network device may send second indication information and seventh indication information to the relay device. The seventh indication information indicates a second receive power spectral density, and the second receive power spectral density is a receive power that is expected by the network device and that is of the relay device on the unit frequency domain unit. The relay device determines the second receive power based on the first bandwidth and the second receive power spectral density. A manner in which the seventh indication information indicates the second receive power spectral density is similar to the manner in which the sixth indication information indicates the first receive power spectral density. Details are not described herein again. It should be noted that a manner used by the relay device to determine the second receive power may be different from the manner used by the relay device to determine the first receive power. For example, the relay device determines the first receive power in the indication manner 2 used by the network device, and determines the second receive power in the indication manner 3 used by the network device. The manner used by the relay device to determine the second receive power may alternatively be the same as the manner used by the relay device to determine the first receive power.

In an example, the relay device may determine that the second forwarding power is a sum of the second receive power and a maximum forwarding gain (for example, referred to as a second forwarding gain) of the relay device. The second forwarding gain may be represented by dB.

In another example, the relay device determines that the second forwarding power is a maximum forwarding power corresponding to the second receive power. The relay device stores an association relationship between the second forwarding power and the second receive power. In this case, the relay device stores the association relationship between the second forwarding power and the second receive power, it may be agreed that the second forwarding power is the maximum forwarding power corresponding to the second receive power, and implementation is simple.

For example, after determining the second receive power Pin2, the relay device may further determine a maximum power that can be outputted at the second receive power (a working point) Pin2. It may be understood that, when non-linearity of a power amplifier of the relay device is not considered, the relay device has a plurality of forwarding amplification gains, the relay device determines a maximum forwarding gain G2 [dB], and the relay device may determine the second forwarding power P2=Pin2+G2 [dBm]. When the non-linearity of the power amplifier of the relay device is considered, the relay device pre-stores an input/output power curve chart of the relay device at a maximum amplification level, and may obtain an output power corresponding to the second receive power Pin2. FIG. 6 is a curve chart of an input/output power at each amplification level of a relay device. In FIG. 6, an example in which the relay device has three amplification levels is used. The three levels correspond to three curves Ga, Gb, and Gc respectively. It can be learned from FIG. 6 that the relay device determines that the maximum forwarding power corresponding to the second receive power Pin2 is P2.

Considering that the relay device is limited by the maximum forwarding power, the relay device may determine the third forwarding power, and then determine the target forwarding power.

For example, the relay device may determine the third forwarding power based on a total transmit power, where the total transmit power is a maximum transmit power determined based on a capability of the relay device or according to a regulatory requirement, and/or the total transmit power is indicated by the network device.

For example, the relay device determines the third forwarding power based on a transmit power of a first module and the total transmit power. The first module is configured to send, to the second device, a signal generated by the first module (may also be referred to as a first assembly, a first channel, or a first unit). For example, the first module is an MT module, and is configured to feed back information to the network device and the like. If the MT module and the RU module share a transmit power limit, the third forwarding power is a remaining power obtained by subtracting the transmit power of the MT module from a total transmit power limit.

For example, if the relay device needs to perform uplink forwarding and send uplink information (information processed by the MT module) of the relay device in a time unit, the relay device determines the third forwarding power P3 based on a transmit power of the uplink information of the relay device. It is assumed that local laws stipulate that the total transmit power limit of the relay device is P4 [dBm], and the transmit power used by the relay device to send the uplink information of the relay device is P5 [dBm], the third forwarding power is $P3=10\log_{10}(10^{0.1}\times P4-10^{0.1}\times P5)$.

After determining the first forwarding power, the second forwarding power, and the third forwarding power, the relay device may determine that the target forwarding power is the lowest power of the first forwarding power, the second forwarding power, and the third forwarding power. In other words, Pout=min(P1, P2, P3).

Optionally, the relay device may alternatively first determine a forwarding power limit Pmax=min(P2, P3), and then determine that Pout=min(P1, Pmax).

When the network device indicates a gain of the relay device, this application may also be equivalent to a manner in which the relay device determines the forwarding gain, that is, the relay device determines that the forwarding gain of the relay device for the first signal is Gout=min(G1, G2, G3=P3-Pin2). The first forwarding gain G1 is a forwarding gain indicated by the network device (for an indication manner and a related definition, refer to the related descriptions in the determining manner 5, and details are not described herein again), the second forwarding gain is a maximum forwarding gain of the relay device (for related descriptions, refer to the related descriptions in the second forwarding power), P3 is the third forwarding power, and Pin2 is the second receive power. For definitions and determining manners, refer to the foregoing descriptions. Details are not described herein again. The third forwarding gain G3=P3-Pin2 may be understood as a maximum forwarding gain that can be reached by the relay device for the receive power of the first signal when a maximum forwarding power limit is considered.

Optionally, the relay device may alternatively first determine a forwarding gain limit Gmax=min(G2, P3-Pin2), and then determine Gout=min(G1, Gmax).

S303: The relay device sends indication information of a forwarding power headroom to the network device, and correspondingly, the network device receives the indication information of the forwarding power headroom sent by the relay device.

The target forwarding power finally determined by the relay device may not reach the forwarding power expected by the network device. In this case, the relay device may send the indication information of the forwarding power headroom to the network device. The forwarding power headroom is a difference between the first forwarding power and the second forwarding power (or may be a difference between the second forwarding power and the first forwarding power), and/or the forwarding power headroom is a difference between the first forwarding power and the third forwarding power (or may be a difference between the third forwarding power and the first forwarding power). The relay device reports the forwarding power headroom to the network device, to notify the network device of a difference between the forwarding power expected by the network device and a forwarding power that can be actually outputted by the relay device. This helps the network device determine how to improve coverage performance of the terminal device or improve a forwarding gain of the relay device. For example, when the forwarding power expected by the network device is less than the forwarding power that can be actually outputted by the relay device, the network device may further improve coverage by increasing the forwarding power of the relay device. When the forwarding power expected by the network device is greater than the forwarding power that can be actually outputted by the relay device, for example, the first forwarding power is greater than the third forwarding power, because the relay device cannot increase the forwarding power, the network device may further improve the coverage performance of the terminal device under the relay device through repeated sending, bit rate reduction, or the like. For another example, when the first forwarding power is greater than or equal to the second forwarding power but is less than the third forwarding power, the forwarding power of the relay device does not exceed the maximum forwarding power limit. It may be considered that because the input power of the relay device is excessively small, the forwarding power that can be actually outputted by the relay device is less than the forwarding power expected by the network device, or it may be considered that the forwarding gain that is expected by the network device and that is of the relay device exceeds the maximum forwarding gain of the relay device. In this case, the network device may allocate more frequency domain resources to the terminal device under the relay device to improve coverage. In other words, the network device can increase the forwarding power of the relay device while ensuring that the power spectral density and the forwarding gain remain unchanged, so that the network device indicates a proper forwarding power to the relay device. It should be noted that S303 is not a mandatory step, and is shown by using a dashed line in FIG. 3.

Optionally, when the first forwarding power is greater than or equal to the third forwarding power, the relay device reports the difference between the first forwarding power and the third forwarding power. When the first forwarding power is greater than or equal to the second forwarding power, the relay device reports the difference between the first forwarding power and the second forwarding power.

Optionally, when the first forwarding power is greater than or equal to the third forwarding power, the relay device reports the difference between the first forwarding power and the third forwarding power. When the first forwarding power is less than or equal to the third forwarding power and the first forwarding power is greater than or equal to the second forwarding power, the relay device reports the difference between the first forwarding power and the second forwarding power.

It should be noted that the difference between the first forwarding power and the second forwarding power may be P1-P2, or may be P2-P1. The difference between the first forwarding power and the third forwarding power may be P1-P3, or may be P3-P1.

It may be understood that, in this application, the difference between the first forwarding power and the third forwarding power is equal to a difference between the first forwarding gain and the third forwarding gain, and the difference between the first forwarding power and the second forwarding power is equal to a difference between the first forwarding gain and the second forwarding gain. Similar to a case that the relay device reports the forwarding power headroom, the relay device may also send indication information of a forwarding gain headroom, where the forwarding gain headroom is a difference between the first forwarding gain and the second forwarding gain (or a difference between the second forwarding gain and the first forwarding gain), and/or the forwarding gain headroom is a difference between the first forwarding gain and the third forwarding gain (or a difference between the third forwarding gain and the first forwarding gain). The relay device may report the forwarding gain headroom to the network device, to notify the network device of a difference between a forwarding gain expected by the network device and a forwarding gain that can be actually outputted by the relay device. When the network device needs to further improve coverage performance of a terminal device served by the relay device, this helps the network device determine whether to further increase the forwarding power or a forwarding gain or use another means (for example, perform repeated sending in time or allocate more frequency domain resources).

Optionally, when the first forwarding gain is greater than or equal to the third forwarding gain or when the first forwarding power is greater than or equal to the third forwarding power, the relay device reports the difference between the first forwarding power and the third forwarding power or the difference between the first forwarding gain and the third forwarding gain. When the first forwarding gain is greater than or equal to the second forwarding gain, the relay device reports the difference between the first forwarding gain and the second forwarding gain.

Optionally, when the first forwarding gain is greater than or equal to the third forwarding gain or when the first forwarding power is greater than or equal to the third forwarding power, the relay device reports the difference between the first forwarding power and the third forwarding power or the difference between the first forwarding gain and the third forwarding gain. When the first forwarding gain is less than or equal to the third forwarding gain or when the first forwarding power is less than or equal to the third forwarding power, and the first forwarding gain is greater than or equal to the second forwarding gain, the relay device reports the difference between the first forwarding gain and the second forwarding gain.

It should be noted that the difference between the first forwarding gain and the second forwarding gain may be G1-G2, or may be G2-G1. The difference between the first forwarding gain and the third forwarding gain may be G1-G3, or may be G3-G1.

S304: The relay device sends first indication information to the network device, and correspondingly, the network device receives the first indication information sent by the relay device, where the first indication information indicates a type of the forwarding power headroom.

The type of the forwarding power headroom means that the forwarding power headroom is the difference between the first forwarding power and the second forwarding power or the difference between the first forwarding power and the third forwarding power. The relay device may further indicates the type of the forwarding power headroom to the network device, to indicate that the forwarding power headroom is the difference between the first forwarding power and the second forwarding power or the difference between the first forwarding power and the third forwarding power, so that the network device determines a reason why the relay device cannot output a corresponding forwarding power, to help the network device indicate a more proper forwarding power to the relay device. For example, when the forwarding power headroom is the difference between the first forwarding power and the second forwarding power, that is, P1 is greater than P2, the relay device may send the first indication information to the network device, where the first indication information indicates a power headroom type, and the power headroom type indicates that the forwarding power headroom is the difference between the first forwarding power and the second forwarding power. When the network device sends indication information of the first gain to the relay device, the relay device may equivalently report a difference between the first forwarding gain and the maximum forwarding gain of the relay device. The network device receives the first indication information, and may learn that the forwarding power expected by the network device is greater than the power that can be actually forwarded by the relay device. In this case, the network device may consider that the relay device cannot output the forwarding power expected by the network device because the input power of the relay device is too small or the gain of the relay device is limited. When the forwarding power headroom is the difference between the first forwarding power and the third forwarding power, that is, P1 is greater than P3, the first indication information indicates a power headroom type, and the power headroom type indicates that the forwarding power headroom is the difference between the first forwarding power and the third forwarding power. The network device receives the first indication information, and may learn that the forwarding power expected by the network device exceeds a regulation limit or enters a nonlinear saturation area of a power amplifier of the relay device. As a result, the relay device cannot output the forwarding power expected by the network device.

That the relay device reports the type of the forwarding power headroom may also be understood as that the relay device may report a type of the forwarding gain headroom. The type of the forwarding gain headroom means that the forwarding gain headroom is the difference between the first forwarding gain and the second forwarding gain or the difference between the first forwarding gain and the third forwarding gain or the difference between the first forwarding power and the third forwarding power. In this way, the network device determines a reason why the relay device cannot output a corresponding forwarding gain, so that the network device indicates a more proper forwarding gain to the relay device.

It may be understood that if S303 is not performed, S304 is not performed either. Therefore, S304 is not a mandatory step, and is shown by using a dashed line in FIG. 3. In addition, an execution sequence of S301 and S302 is not limited. For example, S302 and S301 may be performed simultaneously.

In embodiments of this application, in addition to considering the forwarding power expected by the network device and the maximum forwarding power limit of the relay device, the relay device further considers the forwarding power that can be reached by the relay device by using the maximum forwarding gain under the given input power. Therefore, according to the method provided in embodiments of this application, the relay device may output a forwarding power matching a capability of the relay device or matching the forwarding power expected by the network device.

In embodiments of this application, the method provided in embodiments of this application is separately described from perspectives of the relay device, the terminal device, the network device, interaction between the relay device and the terminal device, and interaction between the relay device and the network device. To implement functions in the methods provided in embodiments of this application, the relay device, the terminal device, and the network device may include a hardware structure and/or a software module, and implement the foregoing functions in a form of the hardware structure, the software module, or a combination of the hardware structure and the software module.

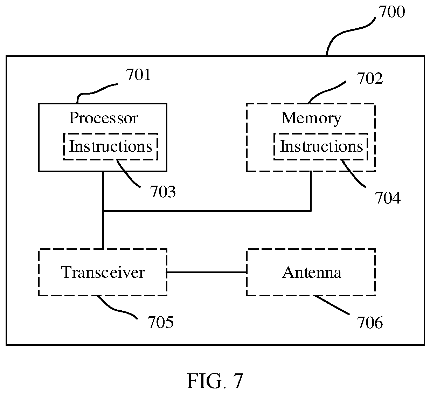

The following describes, with reference to the accompanying drawings, a communication apparatus configured to implement the foregoing methods in embodiments of this application. For example, FIG. 7 is a block diagram of a communication apparatus 700 according to an embodiment of this application. The communication apparatus 700 may be a relay device, and can implement a function of the relay device in the method provided in embodiments of this application. Alternatively, the communication apparatus 700 may be an apparatus that can support the relay device in implementing a corresponding function in the method provided in embodiments of this application. The communication apparatus 700 may be a chip system. In this embodiment of this application, the chip system may include a chip, or may include the chip and another discrete component. For a specific function, refer to the descriptions in the foregoing method embodiments. The communication apparatus 700 may alternatively be a relay device, and can implement a function of the relay device in the method provided in embodiments of this application. The communication apparatus 700 may alternatively be an apparatus that can support the relay device in implementing a corresponding function in the method provided in embodiments of this application. The communication apparatus 700 may be a chip system. The chip system may include a chip, or may include the chip and another discrete component. For a specific function, refer to the descriptions in the foregoing method embodiments.

The communication apparatus 700 includes one or more processors 701 that may be configured to implement or support the communication apparatus 700 in implementing the function of the relay device in the methods provided in embodiments of this application. For details, refer to the detailed descriptions in the method examples. Details are not described herein again. The one or more processors 701 may also be configured to implement or support the communication apparatus 700 in implementing the function of the relay device in the methods provided in embodiments of this application. For details, refer to the detailed descriptions in the method examples. Details are not described herein again. The processor 701 may also be referred to as a processing unit or a processing module, and may implement a specific control function. The processor 701 may be a general-purpose processor, a dedicated processor, or the like. For example, the processor includes a central processing unit, an application processor, a modem processor, a graphics processor, an image signal processor, a digital signal processor, a video codec processor, a controller, a memory, a neural network processor, and/or the like. The central processing unit may be configured to control the communication apparatus 700, execute a software program, and/or process data. Different processors may be independent components, or may be integrated into one or more processors, for example, integrated into one or more application-specific integrated circuits.

Optionally, the communication apparatus 700 includes one or more memories 702 that are configured to store instructions 704. The instructions may be run on the processor 701, to enable the communication apparatus 700 to perform the methods described in the foregoing method embodiments. The memory 702 and the processor 701 may be separately disposed, or may be integrated together, or it may be considered that the memory 702 is coupled to the processor 701. The coupling in this embodiment of this application may be an indirect coupling or a communication connection between apparatuses, units, or modules in an electrical form, a mechanical form, or another form, and is used for information exchange between the apparatuses, the units, or the modules. The processor 701 and the memory 702 may cooperatively operate. At least one of the at least one memory may be included in the processor. It should be noted that the memory 702 is not mandatory, and is shown by using a dashed line in FIG. 7.

Optionally, the memory 702 may further store data. The processor and the memory may be separately disposed, or may be integrated. In embodiments of this application, the memory 702 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 700 may include instructions 703 (sometimes may also be referred to as code or a program). The instructions 703 may be run on the processor, to enable the communication apparatus 700 to perform the methods described in the foregoing embodiments. The processor 701 may store data.

Optionally, the communication apparatus 700 may further include a transceiver 705 and an antenna 706. The transceiver 705 may be referred to as a transceiver unit, a transceiver module, a transceiver machine, a transceiver circuit, a transceiver, an input/output interface, or the like, and is configured to implement a transceiver function of the communication apparatus 700 through the antenna 706.

The processor 701 and the transceiver 705 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be an independent device (for example, an independent integrated circuit or a mobile phone), or may be a part (for example, a module that may be embedded in another device) of a large device. For details, refer to the foregoing descriptions about the terminal device and the network device. Details are not described herein again.

Optionally, the communication apparatus 700 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 700 may include more or fewer components, or some components are integrated, or some components are split. These components may be implemented by hardware, software, or a combination of software and hardware.

It should be noted that the communication apparatus in the foregoing embodiments may be a relay device, may be a circuit, may be a chip used in the relay device, or may be another integrated component, part, or the like that has a function of the relay device (or the first device). When the communication apparatus is a relay device, the transceiver module may be a transceiver, and may include an antenna, a radio frequency circuit, and the like.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. The communication system includes at least one relay device, at least one terminal device, and at least one network device. For example, the communication system includes the relay device, the terminal device, and the network device that are configured to implement related functions in embodiments provided in this application. For details, refer to the related descriptions in the method embodiments. Details are not described herein again.

An embodiment of this application further provides a computer-readable storage medium, including instructions. When the instructions are run on a computer, the computer is enabled to perform the method performed by the relay device in embodiments of this application.

An embodiment of this application further provides a computer program product, including instructions. When the instructions are run on a computer, the computer is enabled to perform the method performed by the relay device in embodiments of this application.

An embodiment of this application provides a chip system. The chip system includes a processor, may further include a memory, and is configured to implement functions of the relay device in the foregoing methods. The chip system may include a chip, or may include the chip and another discrete component.

In embodiments of this application, unless otherwise specified, a quantity of nouns represents "a singular noun or plural nouns", that is, "one or more". "At least one" means one or more, and "a plurality of" means two or more (including two). "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B.

Ordinal numbers such as "first" and "second" mentioned in embodiments of this application are used to distinguish between a plurality of objects, and are not used to limit sizes, content, a sequence, a time sequence, application scenarios, priorities, importance degrees, or the like of the plurality of objects. For example, a first reference signal and a second reference signal may be a same reference signal, or may be different reference signals. In addition, this type of name does not indicate that sizes, priorities, importance degrees, or the like of the two reference signals are different.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions.

It is clear that persons skilled in the art can make various modifications and variations to this application without departing from the scope of this application. This application is intended to cover these modifications and variations of this application provided that they fall within the scope of protection defined by the following claims and their equivalent technologies.

**Claims**

1. A power control method, comprising:

   determining, by a relay device, a target forwarding power based on a first forwarding power, a second forwarding power, and a third forwarding power, wherein the target forwarding power is a lowest power of the first forwarding power, the second forwarding power, and the third forwarding power, the first forwarding power is determined based on an indication of a network device, the second forwarding power is related to an input power of the relay device and a forwarding gain of the relay device, and the third forwarding power is determined based on a maximum forwarding power limit of the relay device; and

   forwarding, by the relay device by using the target forwarding power, a first signal received from a first device to a second device.

2. The method according to claim 1, wherein the method further comprises:
   sending, by the relay device, indication information of a forwarding power headroom, wherein the forwarding power headroom is a difference between the first forwarding power and the second forwarding power and/or a difference between the first forwarding power and the third forwarding power.

3. The method according to claim 2, wherein when the forwarding power headroom is the difference between the first forwarding power and the second forwarding power, the method further comprises:

   sending, by the relay device, first indication information, wherein the first indication information indicates a power headroom type, and the power headroom type indicates that the forwarding power headroom is the difference between the first forwarding power and the second forwarding power; or
   when the forwarding power headroom is the difference between the first forwarding power and the third forwarding power, the method further comprises:
   sending, by the relay device, first indication information, wherein the first indication information indicates a power headroom type, and the power headroom type indicates that the forwarding power headroom is the difference between the first forwarding power and the third forwarding power.

4. The method according to claim 2 or 3, wherein

   when the first forwarding power is greater than or equal to the third forwarding power, the forwarding power headroom sent by the relay device comprises the difference between the first forwarding power and the third forwarding power; or when the first forwarding power is greater than or equal to the second forwarding power, the forwarding power headroom comprises the difference between the first forwarding power and the third forwarding power; or
   when the first forwarding power is greater than or equal to the third forwarding power, the forwarding power headroom sent by the relay device comprises the difference between the first forwarding power and the third forwarding power; or when the first forwarding power is less than or equal to the third forwarding power and the first forwarding power is greater than or equal to the second forwarding power, the forwarding power headroom comprises the difference between the first forwarding power and the third forwarding power.

5. The method according to any one of claims 1 to 4, wherein the method further comprises:

receiving, by the relay device, second indication information and third indication information, wherein the second indication information indicates a first bandwidth, the third indication information indicates a first forwarding power spectral density, the first bandwidth is a bandwidth of the first signal, and the first forwarding power spectral density is a forwarding power that is expected by the network device and that is of the relay device on a unit frequency domain unit; and

determining, by the relay device, the first forwarding power based on the first bandwidth and the first forwarding power spectral density.

6. The method according to any one of claims 1 to 4, wherein the method further comprises:

receiving, by the relay device, second indication information and fourth indication information, wherein the second indication information indicates a first bandwidth, the first bandwidth is a bandwidth of the first signal, the fourth indication information indicates a first target receive power spectral density, and the first target receive power spectral density is a receive power that is expected by the second device on a unit frequency domain unit; and

determining, by the relay device, the first forwarding power based on the first target receive power spectral density, the first bandwidth, and a first path loss, wherein the first path loss is a path loss between the relay device and the second device.

7. The method according to any one of claims 1 to 4, wherein the method further comprises:

receiving, by the relay device, fifth indication information, wherein the fifth indication information indicates a first target receive power, and the first target receive power is a receive power expected by the second device; and

determining, by the relay device, the first forwarding power based on the first target receive power and a first path loss, wherein the first path loss is a path loss between the relay device and the second device.

8. The method according to any one of claims 1 to 4, wherein the method further comprises:
receiving, by the relay device, indication information of a value of the first forwarding power, and determining the first forwarding power based on the value of the first forwarding power.

9. The method according to any one of claims 5 to 8, wherein the method further comprises:
receiving, by the relay device, indication information of a first deviation, wherein the first deviation is used to adjust the first forwarding power, and an adjusted first forwarding power is a sum of the first forwarding power and the first deviation.

10. The method according to any one of claims 1 to 4, wherein the method further comprises:

receiving, by the relay device, indication information of a first forwarding gain, wherein the first forwarding gain is a gain of a forwarding power of the relay device for the first signal relative to a receive power of the first signal; and

determining, by the relay device, the first forwarding power based on the first forwarding gain and a first receive power, wherein the first receive power is a receive power at which the relay device receives the first signal.

11. The method according to claim 10, wherein the method further comprises:
measuring, by the relay device, a signal sent in a first time subunit, and determining the first receive power based on an obtained measurement result, wherein the first time subunit belongs to a first time unit, a start location of the first time subunit is the same as a start location of the first time unit, and the first time unit is a time unit in which the first signal is located; or the first time subunit is before a first time unit, an end location of the first time subunit is the same as a start location of the first time unit, and the first time unit is a time unit in which the first signal is located.

12. The method according to any one of claims 1 to 4, wherein the method further comprises:

receiving, by the relay device, a second reference signal and second indication information, wherein the second indication information indicates a first bandwidth, and the first bandwidth is a bandwidth of the first signal;

determining, by the relay device, a first receive power based on a reference signal received power RSRP of the second reference signal and the first bandwidth, wherein the first receive power is used to determine a receive power for receiving the first signal, and the relay device receives the first signal after determining the first receive power; and

determining, by the relay device, the first forwarding power based on a first forwarding gain and the first receive power, wherein the first forwarding gain is a gain of a forwarding power of the relay device for the first signal relative to the receive power of the first signal.

13. The method according to any one of claims 1 to 4, wherein the method further comprises:

receiving, by the relay device, second indication information and sixth indication information, wherein the second indication information indicates a first bandwidth, the first bandwidth is a bandwidth of the first signal, the sixth indication information indicates a first receive power spectral density, and the first receive power spectral density is a receive power that is expected by the network device and that is of the relay device on a unit frequency domain unit;
determining, by the relay device, a first receive power based on the first bandwidth and the first receive power spectral density, wherein the first receive power is used to determine a receive power for receiving the first signal, and the relay device receives the first signal after determining the first receive power; and
determining, by the relay device, the first forwarding power based on a first forwarding gain and the first receive power, wherein the first forwarding gain is a gain of a forwarding power of the relay device for the first signal relative to the receive power of the first signal.

14. The method according to any one of claims 1 to 13, wherein the method further comprises:
determining, by the relay device, the second forwarding power based on a second receive power of the relay device, wherein the second receive power is a receive power at which the relay device receives the first signal or is used to determine a receive power at which the relay device receives the first signal.

15. The method according to claim 14, wherein the second forwarding power is a sum of the second receive power and a third gain, and the third gain is a maximum forwarding gain of the relay device.

16. The method according to claim 14, wherein the second forwarding power is a maximum forwarding power corresponding to the second receive power, and the relay device stores an association relationship between the second forwarding power and the second receive power.

17. The method according to any one of claims 14 to 16, wherein the method further comprises:

receiving, by the relay device, a second reference signal and second indication information, wherein the second indication information indicates a first bandwidth, and the first bandwidth is a bandwidth of the first signal; and
determining, by the relay device, the second receive power based on an RSRP of the second reference signal and the first bandwidth.

18. The method according to any one of claims 14 to 16, wherein the method further comprises:
measuring, by the relay device, a signal sent in a first time subunit, and determining the second receive power based on an obtained measurement result, wherein the first time subunit belongs to a first time unit, a start location of the first time subunit is the same as a start location of the first time unit, and the first time unit is a time unit in which the first signal is located; or the first time subunit is before a first time unit, an end location of the first time subunit is the same as a start location of the first time unit, and the first time unit is a time unit in which the first signal is located.

19. The method according to any one of claims 14 to 16, wherein the method further comprises:

receiving, by the relay device, second indication information and seventh indication information, wherein the second indication information indicates a first bandwidth, the first bandwidth is a bandwidth of the first signal, the seventh indication information indicates a second receive power spectral density, and the second receive power spectral density is a receive power that is expected by the network device and that is of the relay device on a unit frequency domain unit; and
determining, by the relay device, the second receive power based on the first bandwidth and the second receive power spectral density.

20. The method according to any one of claims 1 to 18, wherein the method further comprises:
determining, by the relay device, the third forwarding power based on a total transmit power, wherein the total transmit power is a maximum transmit power determined based on a capability of the relay device, and/or the total transmit power is indicated by the network device or preconfigured.

21. The method according to claim 20, wherein the determining, by the relay device, the third forwarding power based on a total transmit power comprises:
determining, by the relay device, the third forwarding power based on a transmit power of a first module and the total transmit power, wherein the first module is configured to send a signal of the relay device to the second device.

22. A relay device, comprising:

a processing module, configured to determine a target forwarding power based on a first forwarding power, a second forwarding power, and a third forwarding power, wherein the target forwarding power is a lowest power of the first forwarding power, the second forwarding power, and the third forwarding power, the first forwarding power is determined based on an indication of a network device, the second forwarding power is related to an input power of the relay device and a forwarding gain of the relay device, and the third forwarding power is determined based on a maximum forwarding power limit of the relay device; and
a transceiver module, configured to forward, by using the target forwarding power, a first signal received from a first device to a second device.

23. The relay device according to claim 22, wherein the transceiver module is further configured to:
send indication information of a forwarding power headroom, wherein the forwarding power headroom is a difference between the first forwarding power and the second forwarding power and/or a difference between the first forwarding power and the third forwarding power.

24. The relay device according to claim 23, wherein

when the forwarding power headroom is the difference between the first forwarding power and the second forwarding power, the transceiver module is further configured to send first indication information, wherein the first indication information indicates a power headroom type, and the power headroom type indicates that the forwarding power headroom is the difference between the first forwarding power and the second forwarding power; or
when the forwarding power headroom is the difference between the first forwarding power and the third forwarding power, the transceiver module is further configured to send first indication information, wherein the first indication information indicates a power headroom type, and the power headroom type indicates that the forwarding power headroom is the difference between the first forwarding power and the third forwarding power.

25. The relay device according to claim 23 or 24, wherein

when the first forwarding power is greater than or equal to the third forwarding power, the forwarding power headroom sent by the relay device comprises the difference between the first forwarding power and the third forwarding power; or when the first forwarding power is greater than or equal to the second forwarding power, the forwarding power headroom comprises the difference between the first forwarding power and the third forwarding power; or
when the first forwarding power is greater than or equal to the third forwarding power, the forwarding power headroom sent by the relay device comprises the difference between the first forwarding power and the third forwarding power; or when the first forwarding power is less than or equal to the third forwarding power and the first forwarding power is greater than or equal to the second forwarding power, the forwarding power headroom comprises the difference between the first forwarding power and the third forwarding power.

26. The relay device according to any one of claims 22 to 25, wherein

the transceiver module is further configured to receive second indication information and third indication information, wherein the second indication information indicates a first bandwidth, the third indication information indicates a first forwarding power spectral density, the first bandwidth is a bandwidth of the first signal, and the first forwarding power spectral density is a forwarding power that is expected by the network device and that is of the relay device on a unit frequency domain unit; and
the processing module is further configured to determine the first forwarding power based on the first bandwidth and the first forwarding power spectral density.

27. The relay device according to any one of claims 22 to 25, wherein

the transceiver module is further configured to receive second indication information and fourth indication information, wherein the second indication information indicates a first bandwidth, the first bandwidth is a bandwidth of the first signal, the fourth indication information indicates a first target receive power spectral density, and the first target receive power spectral density is a receive power that is expected by the second device on a unit frequency domain unit; and

the processing module is further configured to determine the first forwarding power based on the first target receive power spectral density, the first bandwidth, and a first path loss, wherein the first path loss is a path loss between the relay device and the second device.

28. The relay device according to any one of claims 22 to 25, wherein

the transceiver module is further configured to receive fifth indication information, wherein the fifth indication information indicates a first target receive power, and the first target receive power is a receive power expected by the second device; and

the processing module is further configured to determine the first forwarding power based on the first target receive power and a first path loss, wherein the first path loss is a path loss between the relay device and the second device.

29. The relay device according to any one of claims 22 to 25, wherein the transceiver module is further configured to: receive indication information of a value of the first forwarding power, and determine the first forwarding power based on the value of the first forwarding power.

30. The relay device according to any one of claims 26 to 29, wherein the transceiver module is further configured to: receive indication information of a first deviation, wherein the first deviation is used to adjust the first forwarding power, and an adjusted first forwarding power is a sum of the first forwarding power and the first deviation.

31. The relay device according to any one of claims 22 to 25, wherein

the transceiver module is further configured to receive indication information of a first forwarding gain, wherein the first forwarding gain is a gain of a forwarding power of the relay device for the first signal relative to a receive power of the first signal; and

the processing module is further configured to determine the first forwarding power based on the first forwarding gain and a first receive power, wherein the first receive power is a receive power at which the relay device receives the first signal.

32. The relay device according to claim 31, wherein the processing module is further configured to: measure a signal sent in a first time subunit, and determine the first receive power based on an obtained measurement result, wherein the first time subunit belongs to a first time unit, a start location of the first time subunit is the same as a start location of the first time unit, and the first time unit is a time unit in which the first signal is located; or the first time subunit is before a first time unit, an end location of the first time subunit is the same as a start location of the first time unit, and the first time unit is a time unit in which the first signal is located.

33. The relay device according to any one of claims 22 to 25, wherein

the transceiver module is further configured to receive a second reference signal and second indication information, wherein the second indication information indicates a first bandwidth, and the first bandwidth is a bandwidth of the first signal;

the processing module is further configured to determine a first receive power based on a reference signal received power RSRP of the second reference signal and the first bandwidth, wherein the first receive power is used to determine a receive power for receiving the first signal, and the relay device receives the first signal after determining the first receive power; and

the processing module is further configured to determine the first forwarding power based on a first forwarding gain and the first receive power, wherein the first forwarding gain is a gain of a forwarding power of the relay device for the first signal relative to the receive power of the first signal.

34. The relay device according to any one of claims 22 to 25, wherein

the transceiver module is further configured to receive second indication information and sixth indication information, wherein the second indication information indicates a first bandwidth, the first bandwidth is a bandwidth of the first signal, the sixth indication information indicates a first receive power spectral density, and the first receive power spectral density is a receive power that is expected by the network device and that is of the relay device on a unit frequency domain unit;

the processing module is further configured to determine a first receive power based on the first bandwidth and the first receive power spectral density, wherein the first receive power is used to determine a receive power for receiving the first signal, and the relay device receives the first signal after determining the first receive power; and

the processing module is further configured to determine the first forwarding power based on a first forwarding gain and the first receive power, wherein the first forwarding gain is a gain of a forwarding power of the relay device for the first signal relative to the receive power of the first signal.

35. The relay device according to any one of claims 22 to 34, wherein the processing module is further configured to: determine the second forwarding power based on a second receive power of the relay device, wherein the second receive power is a receive power at which the relay device receives the first signal or is used to determine a receive power at which the relay device receives the first signal.

36. The relay device according to claim 35, wherein the second forwarding power is a sum of the second receive power and a third gain, and the third gain is a maximum forwarding gain of the relay device.

37. The relay device according to claim 35, wherein the second forwarding power is a maximum forwarding power corresponding to the second receive power, and the relay device stores an association relationship between the second forwarding power and the second receive power.

38. The relay device according to any one of claims 22 to 25, wherein

the transceiver module is further configured to receive a second reference signal and second indication information, wherein the second indication information indicates a first bandwidth, and the first bandwidth is a bandwidth of the first signal; and

the processing module is further configured to determine the second receive power based on an RSRP of the second reference signal and the first bandwidth.

39. The relay device according to claim 38, wherein the processing module is further configured to measure a signal sent in a first time subunit, and determine the second receive power based on an obtained measurement result, wherein the first time subunit belongs to a first time unit, a start location of the first time subunit is the same as a start location of the first time unit, and the first time unit is a time unit in which the first signal is located; or the first time subunit is before a first time unit, an end location of the first time subunit is the same as a start location of the first time unit, and the first time unit is a time unit in which the first signal is located.

40. The relay device according to any one of claims 22 to 25, wherein

the transceiver module is further configured to receive second indication information and seventh indication information, wherein the second indication information indicates a first bandwidth, the first bandwidth is a bandwidth of the first signal, the seventh indication information indicates a second receive power spectral density, and the second receive power spectral density is a receive power that is expected by the network device and that is of the relay device on a unit frequency domain unit; and

the processing module is further configured to determine the second receive power based on the first bandwidth and the second receive power spectral density.

41. The relay device according to any one of claims 22 to 39, wherein the processing module is further configured to: determine the third forwarding power based on a total transmit power, wherein the total transmit power is a maximum transmit power determined based on a capability of the relay device, and/or the total transmit power is indicated by the network device or preconfigured.

42. The relay device according to claim 41, wherein the processing module is specifically configured to: determine the third forwarding power based on a transmit power of a first module and the total transmit power, wherein the first module is configured to send a signal of the relay device to the second device.

43. A relay device, wherein the relay device comprises a processor and a memory, the memory is configured to store a computer program, and the processor is configured to execute the computer program stored in the memory, to enable the relay device to perform the method according to any one of claims 1 to 21.

44. A chip, wherein the chip is located inside a relay device, the chip comprises at least one processor and an interface, the processor is configured to read and execute instructions stored in a memory, and when the instructions are run, the relay device is enabled to perform the method according to any one of claims 1 to 21.

45. A communication system, comprising the relay device according to claim 43, a terminal device, and a network device; or comprising the relay device according to any one of claims 22 to 42, a terminal device, and a network device.

46. A computer-readable storage medium, wherein the computer-readable storage medium stores a computer program, and when the computer program is run on a relay device, the relay device is enabled to perform the method according to any one of claims 1 to 21.

47. A computer program product, wherein the computer program product comprises a computer program, and when the computer program is run on a relay device, the relay device is enabled to perform the method according to any one of claims 1 to 21.

Relay device

Network device

Terminal device

FIG. 1

Donor antenna

Service antenna

FIG. 2A

FIG. 2B

| Terminal device | | Relay device | | Network device |
|---|---|---|---|---|

S300: First forwarding power indication information, indicating a first forwarding power

S301: Determine a lowest power of the first forwarding power, a second forwarding power, and a third forwarding power as a target forwarding power

First signal

S302: Forward the first signal by using the target forwarding power

S302: Forward the first signal by using the target forwarding power

First signal

S303: Indication information indicating a forwarding power headroom

S304: First indication information, indicating a type of the forwarding power headroom

FIG. 3

Antenna

RU module

Antenna

MT module

FIG. 4

Antenna

FIG. 5

FIG. 6

FIG. 7

## INTERNATIONAL SEARCH REPORT

International application No.

**PCT/CN2023/095506**

### A. CLASSIFICATION OF SUBJECT MATTER

H04W 52/22(2009.01)i

According to International Patent Classification (IPC) or to both national classification and IPC

### B. FIELDS SEARCHED

Minimum documentation searched (classification system followed by classification symbols)

IPC: H04W, H04L, G06F

Documentation searched other than minimum documentation to the extent that such documents are included in the fields searched

Electronic data base consulted during the international search (name of data base and, where practicable, search terms used)

DWPI; WPABS; CNTXT; CNKI; ENTXT; 3GPP: 中继, 转发, 功率, 最小, 较小, 指示, 增益, 最大, 最高, relay, forward+, power, min, smaller, indicat+, gain, max, highest, H04W52/04/IC/CPC, H04W52/18/IC/CPC, H04W52/22/IC/CPC

### C. DOCUMENTS CONSIDERED TO BE RELEVANT

| Category* | Citation of document, with indication, where appropriate, of the relevant passages | Relevant to claim No. |
|---|---|---|
| A | CN 114514781 A (BEIJING XIAOMI MOBILE SOFTWARE CO., LTD.) 17 May 2022 (2022-05-17)<br>entire document | 1-47 |
| A | CN 105007617 A (SHANGHAI UNIVERSITY OF ENGINEERING SCIENCE) 28 October 2015 (2015-10-28)<br>entire document | 1-47 |
| A | WO 2017012587 A1 (ZTE CORP.) 26 January 2017 (2017-01-26)<br>entire document | 1-47 |
| A | US 2020045645 A1 (AT&T INTELLECTUAL PROPERTY I, L.P.) 06 February 2020 (2020-02-06)<br>entire document | 1-47 |
| A | US 2021306962 A1 (QUALCOMM INC.) 30 September 2021 (2021-09-30)<br>entire document | 1-47 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 July 2023** | **06 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095506**

| Patent document cited in search report | | | Publication date (day/month/year) | Patent family member(s) | | | Publication date (day/month/year) |
|---|---|---|---|---|---|---|---|
| CN | 114514781 | A | 17 May 2022 | None | | | |
| CN | 105007617 | A | 28 October 2015 | None | | | |
| WO | 2017012587 | A1 | 26 January 2017 | None | | | |
| US | 2020045645 | A1 | 06 February 2020 | US | 11197246 | B2 | 07 December 2021 |
| | | | | US | 2022060995 | A1 | 24 February 2022 |
| US | 2021306962 | A1 | 30 September 2021 | WO | 2021202462 | A1 | 07 October 2021 |
| | | | | EP | 4128574 | A1 | 08 February 2023 |

Form PCT/ISA/210 (patent family annex) (July 2022)

**REFERENCES CITED IN THE DESCRIPTION**

**Patent documents cited in the description**

- CN 202210562403X
- CN 202210851939